# EUROPEAN PATENT APPLICATION

(11) **EP 1 855 181 A2**
(43) Date of publication of application: **14.11.2007**
(21) Application number: 07003353.5
(22) Date of filing: 16.02.2007
(51) Int. Cl.: G06F 1/32

(54) **System with high power and low power processors and thread transfer**

(30) Priority: 14.11.2006 US 599544; 20.09.2006 US 523996; 12.09.2006 US 825368 P; 24.08.2006 US 823453 P; 10.08.2006 US 822015 P; 11.08.2006 US 503016; 31.07.2006 US 820867 P; 10.05.2006 US 799151 P
(71) Applicant: Marvell World Trade Ltd., St. Michael 14027 (BB)
(72) Inventor: Sutardja, Sehat, Los Altos Hills California 94022 (US)
(74) Representative: Grünecker, Kinkeldey, Stockmair & Schwanhäusser Anwaltssozietät

(57) **Abstract**

A system on chip (SOC) includes first and second processors and a control module. The first processor implemented by the SOC has active and inactive states and processes first and second sets of threads during the active state. The second processor implemented by the SOC has active and inactive states, wherein the second processor consumes less power when operating in the active state than the first processor operating in the active state. The control module, implemented by the SOC communicates with the first and second processors, selectively transfers the second set of threads from the first processor to the second processor and selects the inactive state of the first processor. The second processor processes the second set of threads.

## Description

### CROSS-REFERENCE TO RELATED APPLICATIONS

This application claims the benefit of Provisional Application Nos. 60/825,368, filed September 12, 2006, 60/823,453, filed August 24, 2006, and 60/822,015, filed August 10, 2006 and is a continuation-in-part of U.S. Patent Application No. 11/503,016, filed on August 11, 2006, which claims of the benefit of Provisional Application Serial No. 60/820,867 filed on July 31, 2006, and Provisional Application Serial No. 60/799,151 filed on May 10, 2006, which is a continuation-in-part of U.S. Patent Application No. 10/865,368, filed on June 10, 2004, and a continuation-in-part of U.S. Patent Application No. 11/322,447, which was filed on December 29, 2005 and which claims the benefit of Provisional Application Serial No. 60/678,249 filed on May 5, 2005.

This application is related to U.S. Patent Application No. 10/779,544, which was filed on February 13, 2004, and is related to U.S. Patent Application No. 10/865,732, which was filed on June 10, 2004. The disclosures of these applications are all hereby incorporated by reference in their entirety.

### FIELD OF THE INVENTION

The present invention relates to data storage systems, and more particularly to low power data storage systems.

### BACKGROUND OF THE INVENTION

Laptop computers are powered using both line power and battery power. The processor, graphics processor, memory and display of the laptop computer consume a significant amount of power during operation. One significant limitation of laptop computers relates to the amount of time that the laptop can be operated using batteries without recharging. The relatively high power dissipation of the laptop computer usually corresponds to a relatively short battery life.

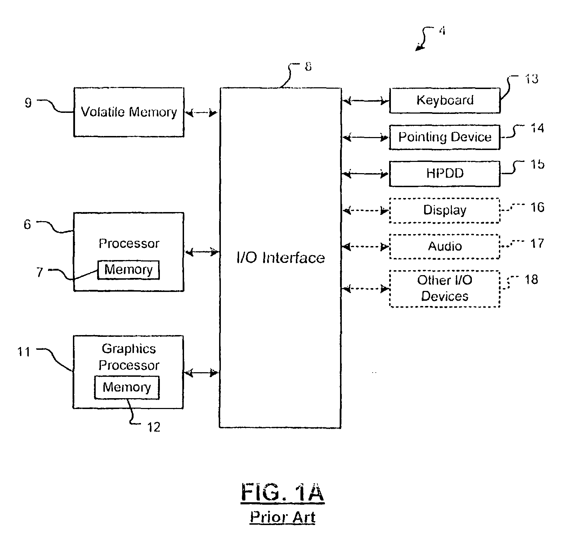

Referring now to FIG. 1A, an exemplary computer architecture 4 is shown to include a processor 6 with memory 7 such as cache. The processor 6 communicates with an input/output (I/O) interface 8. Volatile memory 9 such as random access memory (RAM) 10 and/or other suitable electronic data storage also communicates with the interface 8. A graphics processor 11 and memory 12 such as cache increase the speed of graphics processing and performance.

One or more I/O devices such as a keyboard 13 and a pointing device 14 (such as a mouse and/or other suitable device) communicate with the interface 8. A high power disk drive (HPDD) 15 such as a hard disk drive having one or more platters with a diameter greater than 1.8" provides nonvolatile memory, stores data and communicates with the interface 8. The HPDD 15 typically consumes a relatively high amount of power during operation. When operating on batteries, frequent use of the HPDD 15 will significantly decrease battery life. The computer architecture 4 also includes a display 16, an audio output device 17 such as audio speakers and/or other input/output devices that are generally identified at 13.

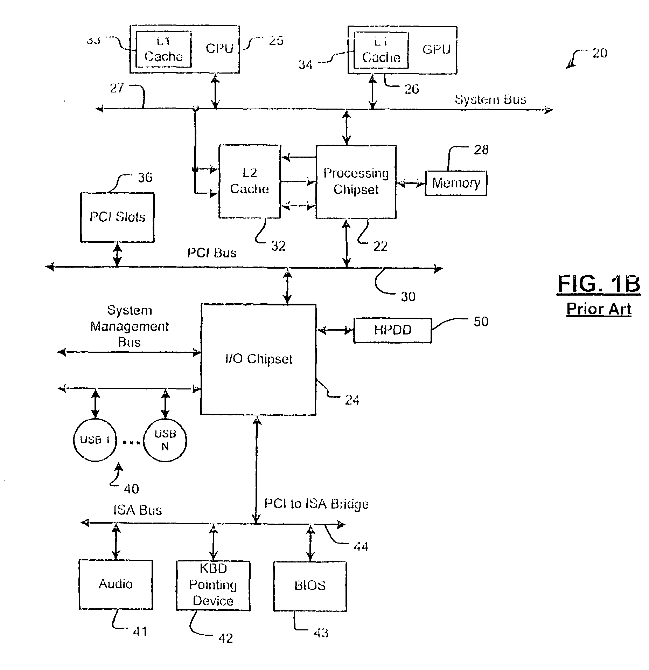

Referring now to FIG. 1B, an exemplary computer architecture 20 includes a processing chipset 22 and an I/O chipset 24. For example, the computer architecture may be a Northbridge/Southbridge architecture (with the processing chipset corresponding to the Northbridge chipset and the I/O chipset corresponding to the Southbridge chipset) or other similar architecture. The processing chipset 22 communicates with a processor 25 and a graphics processor 26 via a system bus 27. The processing chipset 22 controls interaction with volatile memory 28 (such as external DRAM or other memory), a Peripheral Component Interconnect (PCI) bus 30, and/or Level 2 cache 32. Level 1 cache 33 and 34 may be associated with the processor 25 and/or the graphics processor 26, respectively. In an alternate embodiment, an Acce!erated Graphics Port (AGP) (not shown) communicates with the processing chipset 22 instead of and/or in addition to the graphics processor 26. The processing chipset 22 is typically but not necessarily implemented using multiple chips. PCI slots 36 interface with the PCI bus 30.

The I/O chipset 24 manages the basic forms of input/output (I/O). The I/O chipset 24 communicates with an Universal Serial Bus (USB) 40, an audio device 41, a keyboard (KBD) and/or pointing device 42, and a Basic Input/Output System (BIOS) 43 via an Industry Standard Architecture (ISA) bus 44. Unlike the processing chipset 22, the I/O chipset 24 is typically (but not necessarily) Implemented using a single chip, which is connected to the PCI bus 30. A HPDD 50 such as a hard disk drive also communicates with the I/O chipset 24. The HPDD 50 stores a full-featured operating system (OS) such as Windows XP^{®} Windows 2000^{®}, Linux and MAC^{®}-based OS that is executed by the processor 25.

### SUMMARY OF THE INVENTION

A system on chip (SOC) comprises a first processor implemented by the SOC that has active and inactive states and that processes first and second sets of threads during the active state and a second processor implemented by the SOC that has active and inactive states, wherein the second processor consumes less power when operating in the active state than the first processor operating in the active state. The SOC further comprises a control module, implemented by the SOC that communicates with the first and second processors, that selectively transfers the second set of threads from the first processor to the second processor and selects the inactive state of the first processor. The second processor processes the second set of threads.

In another feature, the SOC further comprises a register file implemented by the SOC that communicates with the first processor and the second processor, and that stores thread information for the first and second processors. The thread information includes at least one of registers, checkpoints, and program counters for the threads of the first and second processors.

In another feature, the SOC further comprises a first register file that communicates with the first processor and that stores first thread information for the first processor and a second register file that communicates with the second processor and that stores second thread information for the second processor. The first and second thread information includes at least one of registers, checkpoints, and program counters for the threads of the first and second processors, respectively.

In another feature, the control module transfers the thread information from the first register file to the second register file when transferring the threads from the first processor to the second processor.

In another feature, the first processor includes first transistors and the second processor includes second transistors, and wherein the first transistors have a higher leakage current than the second transistors.

In another feature, the first processor includes first transistors and the second processor includes second transistors, and wherein the second transistors have a greater size than the first transistors.

In another feature, the SOC is in a high-power mode when the first processor is in an active state and a low-power mode when the first processor is in an inactive state.

In another feature, the first and second processors comprise first and second graphics processing units, respectively.

In still other features, a method for processing data comprises implementing first and second processors on a system on chip (SOC), wherein the first and second processors have active and inactive states, and wherein the second processor consumes less power when operating in the active state than the first processor operating in the active state. The method further comprises processing first and second sets of threads during the active state using the first processor; selectively transferring the second set of threads from the first processor to the second processor; selecting the inactive state of the first processor; and processing the second set of threads using the second processor.

In another feature, the method further comprises implementing a register file using the SOC and storing thread information for the first and second processors in the register file. The thread information includes at least one of registers, checkpoints, and program counters for the threads of the first and second processors.

In another feature, the method further comprises implementing a first register file using the SOC, storing first thread information for the first processor in the first register file, implementing a second register file using the SOC, and storing second thread information for the second processor. The first and second thread information includes at least one of registers, checkpoints, and program counters for the threads of the first and second processors, respectively.

In another feature, the method further comprises transferring the thread information from the first register file to the second register file when transferring the threads from the first processor to the second processor.

In another feature, the first processor includes first transistors and the second processor includes second transistors, and wherein the first transistors have a higher leakage current than the second transistors.

In another feature, the first processor includes first transistors and the second processor includes second transistors, and wherein the second transistors have a greater size than the first transistors.

In another feature, the method further comprises operating in a high-power mode when the first processor is in an active state and in a low-power mode when the first processor is in an inactive state.

In another feature, the first and second processors comprise first and second graphics processing units, respectively.

In still other features, a system on chip (SOC) comprises first processing means, implemented by the SOC that has active and inactive states, for processing first and second sets of threads during the active state. The SOC further comprises second processing means for processing, that is implemented by the SOC and that has active and inactive states, wherein the second processing means consumes less power when operating in the active state than the first processing means operating in the active state. The SOC further comprises control means, implemented by the SOC, for communicating with the first and second processing means, for selectively transferring the second set of threads from the first processing means to the second processing means and selecting the inactive state of the first processing means. The second processing means processes the second set of threads.

In another feature, the SOC further comprises register means, implemented by the SOC and that communicates with the first processing means and the second processing means, for storing thread information for the first and second processing means. The thread information includes at least one of registers, checkpoints and program counters for the threads of the first and second processing means.

In another feature, the SOC further comprises first register means that communicates with the first processing means for storing first thread information for the first processing means and second register means that communicates with the second processing means for storing second thread information for the second processing means. The first and second thread information includes at !east one of registers, checkpoints, and program counters for the threads of the first and second processing means, respectively.

In another feature, the control means transfers the thread information from the first register means to the second register means when transferring the threads from the first processing means to the second processing means.

In another feature, the first processing means includes first transistors and the second processing means includes second transistors, and wherein the first transistors have a higher leakage current than the second transistors.

In another feature, the first processing means includes first transistors and the second processing means includes second transistors, and wherein the second transistors have a greater size than the first transistors.

In another feature, the SOC is in a high-power mode when the first processing means is in an active state and a low-power mode when the first processing means is in an inactive state.

In another feature, the first and second processing means comprise first and second graphics processing means for processing graphics, respectively.

In still other features, a processing system comprises a first processor that has active and inactive states and that processes at least one thread during the active state and a second processor that has active and inactive states, wherein the second processor consumes less power when operating in the active state than the first processor operating in the active state. The processing system further comprises a control module that communicates with the first and second processors, and that selectively transfers the at least one thread from the first processor to the second processor and selects the inactive state of the first processor. The second processor processes the at least one thread.

In another feature, the processing system further comprises a register file implemented by the SOC that communicates with the first processor and the second processor and that stores thread information for the first and second processors, wherein the thread information includes at least one of registers, checkpoints, and program counters for the threads of the first and second processors.

In another feature, a system on chip (SOC) comprises the first and second processors and the register file.

In another feature, the processing system further comprises a first register file that communicates with the first processor and that stores first thread information for the first processor and a second register file that communicates with the second processor and that stores second thread information for the second processor, wherein the first and second thread information includes at least one of registers, checkpoints, and program counters for the threads of the first and second processors, respectively.

In another feature, a system on chip (SOC) comprises the first and second processors and the first and second register files.

In another feature, the control module transfers the thread information from the first register file to the second register file when transferring the threads from the first processor to the second processor.

In another feature, the first processor includes first transistors and the second processor includes second transistors, and wherein the first transistors have a higher leakage current than the second transistors.

In another feature, the first processor includes first transistors and the second processor includes second transistors, and wherein the second transistors have a greater size than the first transistors.

In another feature, the processing system is in a high-power mode when the first processor is in an active state and a low-power mode when the first processor is in an inactive state.

In another feature, the first and second processors comprise first and second graphics processing units, respectively.

In still other features, a method of processing data comprises providing first and second processors, wherein the first and second processors have active and inactive states, and wherein the second processor consumes less power when operating in the active state than the first processor operating in the active state. The method further comprises processing at least one thread during the active state using the first processor, selectively transferring the at least one thread from the first processor to the second processor and selecting the inactive state of the first processor, and processing the at least one thread using the second processor.

In another feature, the method further comprises implementing a register file using the SOC and storing thread information for the first and second processors in the register file, wherein the thread information includes at least one of registers, checkpoints and program counters for the threads of the first and second processors.

In another feature, the method further comprises implementing the register file, the first processor and the second processor in a system on chip.

In another feature, the method further comprises implementing a first register file using the SOC, storing first thread information for the first processor in the first register file, implementing a second register file using the SOC, and storing second thread information for the second processor, wherein the first and second thread information includes at least one of registers, checkpoints, and program counters for the threads of the first and second processors, respectively.

In another feature, the method further comprises implementing the first and second register files, the first processor and the second processor in a system on chip.

In another feature, the method further comprises transferring the thread information from the first register file to the second register file when transferring the threads from the first processor to the second processor.

In another feature, the first processor includes first transistors and the second processor includes second transistors, and wherein the first transistors have a higher leakage current than the second transistors.

In another feature, the first processor includes first transistors and the second processor includes second transistors, and wherein the second transistors have a greater size than the first transistors.

In another feature, the method further comprises operating in a high-power mode when the first processor is in an active state and in a low-power mode when the first processor is in an inactive state.

In another feature, the first and second processors comprise first and second graphics processing units, respectively.

In still other features, a processing system comprises first processing means, that has active and inactive states, for processing at least one thread during the active state and second processing means for processing and that has active and inactive states, wherein the second processing means consumes less power when operating in the active state than the first processing means operating in the active state. The processing system further comprises control means for communicating with the first and second processing means, for selectively transferring the at least one thread from the first processing means to the second processing means and selecting the inactive state of the first processing means, wherein the second processing means processes the at least one thread.

In another feature, the processing system further comprises register means, implemented by the SOC and that communicates with the first processing means and the second processing means, for storing thread information for the first and second processing means, wherein the thread information includes at least one of registers, checkpoints, and program counters for the threads of the first and second processing means.

In another feature, the register means and the first and second processing means are implemented in a system on chip.

In another feature, the processing system further comprises first register means that communicates with the first processing means for storing first thread information for the first processing means and second register means that communicates with the second processing means for storing second thread information for the second processing means, wherein the first and second thread information includes at least one of registers, checkpoints and program counters for the threads of the first and second processing means, respectively.

In another feature, the first and second register means and the first and second processing means are implemented in a system on chip.

In another feature, the control means transfers the thread information from the first register means to the second register means when transferring the threads from the first processing means to the second processing means.

In another feature, the first processing means includes first transistors and the second processing means includes second transistors, and wherein the first transistors have a higher leakage current than the second transistors.

In another feature, the first processing means includes first transistors and the second processing means includes second transistors, and wherein the second transistors have a greater size than the first transistors.

In another feature, the processing system operates in a high-power mode when the first processing means is in an active state and in a low-power mode when the first processing means is in an inactive state.

In another feature, the first and second processing means comprise first and second graphics processing means for processing graphics, respectively.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

FIG. 1A and 1B illustrate exemplary computer architectures according to the prior art;

FIG. 2A illustrates a first exemplary computer architecture according to the present invention with a primary processor, a primary graphics processor, and primary volatile memory that operate during a high power mode and a secondary processor and a secondary graphics processor that communicate with the primary processor, that operate during a low power mode and that employ the primary volatile memory during the low power mode;

FIG. 2B illustrates a second exemplary computer architecture according to the present invention that is similar to FIG. 2A and that includes secondary volatile memory that is connected to the secondary processor and/or the secondary graphics processor;

FIG. 2C illustrates a third exemplary computer architecture according to the present invention that is similar to FIG. 2A and that includes embedded volatile memory that is associated with the secondary processor and/or the secondary graphics processor;

FIG. 3A illustrates a fourth exemplary architecture according to the present invention for a computer with a primary processor, a primary graphics processor, and primary volatile memory that operate during a high power mode and a secondary processor and a secondary graphics processor that communicate with a processing chipset, that operate during the low power mode and that employ the primary volatile memory during the low power mode;

FIG. 3B illustrates a fifth exemplary computer architecture according to the present invention that is similar to FIG. 3A and that includes secondary volatile memory connected to the secondary processor and/or the secondary graphics processor;

FIG. 3C illustrates a sixth exemplary computer architecture according to the present invention that is similar to FIG. 3A and that includes embedded volatile memory that is associated with the secondary processor and/or the secondary graphics processor;

FIG. 4A illustrates a seventh exemplary architecture according to the present invention for a computer with a secondary processor and a secondary graphics processor that communicate with an I/O chipset, that operate during the low power mode and that employ the primary volatile memory during the low power mode;

FIG. 4B illustrates an eighth exemplary computer architecture according to the present invention that is similar to FIG. 4A and that includes secondary volatile memory connected to the secondary processor and/or the secondary graphics processor;

FIG. 4C illustrates a ninth exemplary computer architecture according to the present invention that is similar to FIG. 4A and that includes embedded volatile memory that is associated with the secondary processor and/or the secondary graphics processor; and

FIG. 5 illustrates a caching hierarchy according to the present invention for the computer architectures of FIGs. 2A-4C;

FIG. 6 is a functional block diagram of a drive control module that includes a least used block (LUB) module and that manages storage and transfer of data between the low-power disk drive (LPDD) and the high-power disk drive (HPDD);

FIG. 7A is a flowchart illustrating steps that are performed by the drive control module of FIG. 6;

FIG. 7B is a flowchart illustrating alternative steps that are performed by the drive control module of FIG. 6;

FIGs. 7C and 7D are flowcharts illustrating alternative steps that are performed by the drive control module of FIG. 6;

FIG. 8A illustrates a cache control module that includes an adaptive storage control module and that controls storage and transfer of data between the LPDD and HPDD;

FIG. 8B illustrates an operating system that includes an adaptive storage control module and that controls storage and transfer of data between the LPDD and the HPDD;

FIG. 8C illustrates a host control module that includes an adaptive storage control module and that controls storage and transfer of data between the LPDD and HPDD;

FIG. 9 illustrates steps performed by the adaptive storage control modules of FIGs. 8A-8C;

FIG. 10 is an exemplary table illustrating one method for determining the likelihood that a program or file will be used during the low power mode;

FIG. 11A illustrates a cache control module that includes a disk drive power reduction module;

FIG. 11B illustrates an operating system that includes a disk drive power reduction module;

FIG. 11C illustrates a host control module that includes a disk drive power reduction module;

FIG. 12 illustrates steps performed by the disk drive power reduction modules of FIGs. 11A-11C;

FIG. 13 illustrates a multi-disk drive system including a high-power disk drive (HPDD) and a lower power disk drive (LPDD);

FIGs. 14-17 illustrate other exemplary implementations of the multi-disk drive system of FIG. 13;

FIG. 18 illustrates the use of low power nonvolatile memory such as flash memory or a low power disk drive (LPDD) for increasing virtual memory of a computer;

FIGs. 19 and 20 illustrates steps performed by the operating system to allocate and use the virtual memory of FIG. 18;

FIG. 21 is a functional block diagram of a Redundant Array of Independent Disks (RAID) system according to the prior art;

FIG. 22A is a functional block diagram of an exemplary RAID system according to the present invention with a disk array including X HPDD and a disk array including Y LPDD;

FIG. 22B is a functional block diagram of the RAID system of FIG. 22A where X and Y are equal to Z;

FIG. 23A is a functional block diagram of another exemplary RAID system according to the present invention with a disk array including Y LPDD that communicates with a disk array including X HPDD;

FIG. 23B is a functional block diagram of the RAID system of FIG. 23A where X and Y are equal to Z;

FIG. 24A is a functional block diagram of still another exemplary RAID system according to the present invention with a disk array including X HPDD that communicate with a disk array including Y LPDD;

FIG. 24B is a functional block diagram of the RAID system of FIG. 24A where X and Y are equal to Z;

FIG. 25 is a functional block diagram of a network attachable storage (NAS) system according to the prior art;

FIG. 26 is a functional block diagram of a network attachable storage (NAS) system according to the present invention that includes the RAID system of FIGs. 22A, 22B, 23A, 23B, 24A and/or 24B and/or a multi-drive system according to FIGs. 6-17;

FIG. 27 is a functional block diagram of a disk drive controller incorporating a flash memory and disk drive interface controller;

FIG. 28 is a functional block diagram of the interface controller of FIG. 27;

FIG. 29 is a functional block diagram of a multi-disk drive system with a flash interface;

FIG. 30 is a flowchart illustrating steps performed by the multi-disk drive of FIG. 30;

FIGs. 31A-31C are functional block diagrams of processing systems including high power and low-power processors that transfer processing threads to each other when transitioning between high power and low-power modes;

FIGs. 32A-32C are functional block diagrams of graphics processing systems including high power and low-power graphics processing units (GPUs) that transfer graphics processing threads to each other when transitioning between high power and low-power modes;

FIG. 33 is a flowchart illustrating operation of the processing systems of FIGs. 31A-32C;

FIG. 34A is a functional block diagram of a hard disk drive;

FIG. 34B is a functional block diagram of a DVD drive;

FIG. 34C is a functional block diagram of a high definition television;

FIG. 34D is a functional block diagram of a vehicle control system;

FIG. 34E is a functional block diagram of a cellular phone;

FIG. 34F is a functional block diagram of a set top box; and

FIG. 34G is a functional block diagram of a media player.

### DETAILED DESCRIPTION OF THE PREFERRED EMBODIMENTS

The following description of the preferred embodiment(s) is merely exemplary in nature and is in no way intended to limit the invention, its application, or uses. For purposes of clarity, the same reference numbers will be used in the drawings to identify similar elements. As used herein, the term module and/or device refers to an application specific integrated circuit (ASIC), an electronic circuit, a processor (shared, dedicated, or group) and memory that execute one or more software or firmware programs, a combinational logic circuit, and/or other suitable components that provide the described functionality.

As used herein, the term "high power mode" refers to active operation of the host processor and/or the primary graphics processor of the host device. The term "low power mode" refers to low-power hibernating modes, off modes, and/or non-responsive modes of the primary processor and/or primary graphics processor when a secondary processor and a secondary graphics processor are operable. An "off mode" refers to situations when both the primary and secondary processors are off.

The term "low power disk drive" or LPDD refers to disk drives and/or microdrives having one or more platters that have a diameter that is less than or equal to 1.8". The term "high power disk drive" or HPDD refers to hard disk drives having one or more platters that have a diameter that is greater than 1.8". LPDDs typically have lower storage capacities and dissipate less power than the HPDDs. The LPDDs are also rotated at a higher speed than the HPDDs. For example, rotational speeds of 10,000 - 20,000 RPM or greater can be achieved with LPDDs.

The term HDD with non-volatile memory interface (IF) refers to a hard disk drive that is connectable to a host device via a standard semiconductor memory interface of the host. For example, the semiconductor memory interface can be a flash interface.

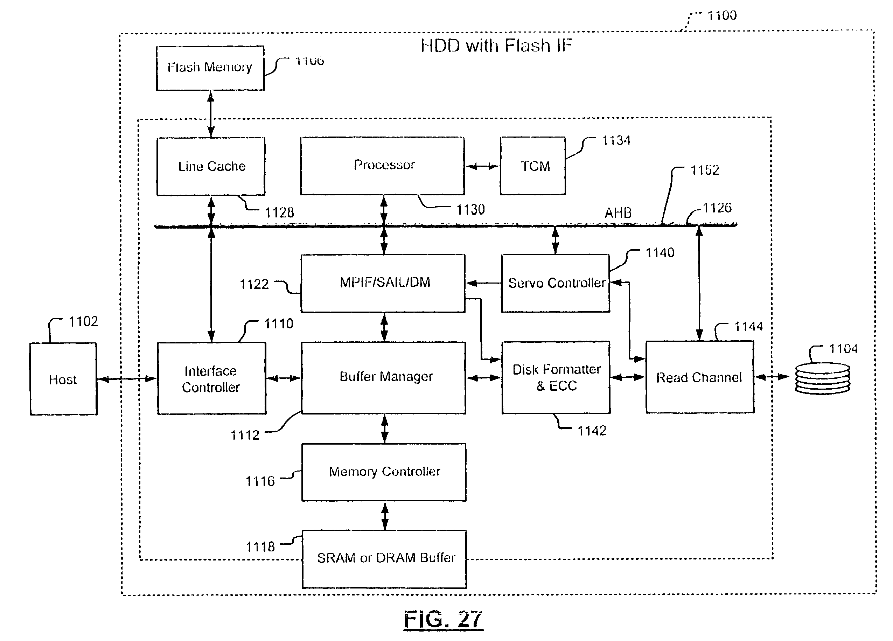

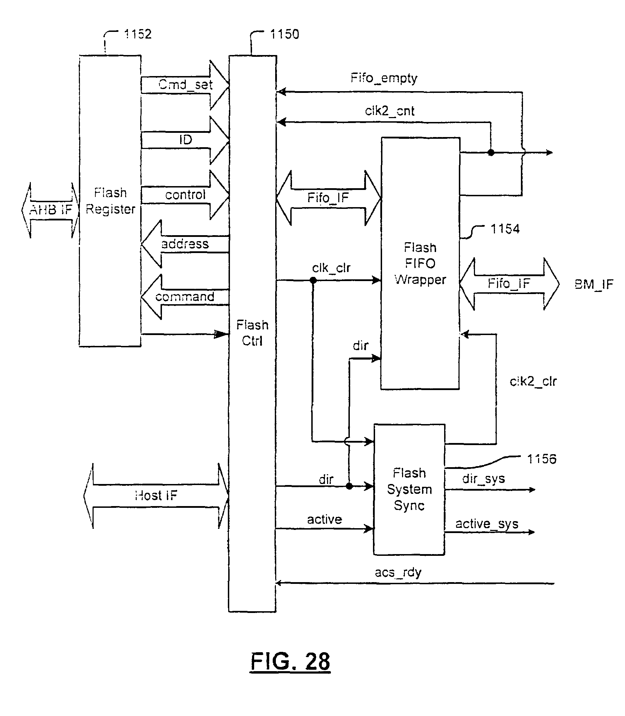

The HDD with a non-volatile memory iF communicates with the host via the non-volatile memory interface using a non-volatile memory interface protocol. The non-volatile memory interface used by the host and the HDD with non-voiatile memory interface can include flash memory having a flash interface, NAND flash with a NAND flash interface or any other type of semiconductor memory interface. The HDD with a non-volatile memory IF can be a LPDD and/or a HPDD. The HDD with a non-volatile memory IF will be described further below in conjunction with FIGs. 27 and 28. Additional details relating to the operation of a HDD with a flash IF can be found in U.S. Patent Application No. 11/322,447, filed on December 29, 2005, which is hereby incorporated by reference in its entirety. In each of the implementations set forth below, the LPDD can be implemented using the HDD (implemented as a HPDD and/or LPDD) with a non-volatile memory IF. Alternately, the HDD with a non-volatile memory iF can be a LPDD and/or HPDD used in addition to the disclosed LPDD and/or HPDD.

The computer architecture according to the present invention includes the primary processor, the primary graphics processor, and the primary memory (as described in conjunction with FIGs. 1A and 1B), which operate during the high power mode. A secondary processor and a secondary graphics processor are operated during the low power mode. The secondary processor and the secondary graphics processor may be connected to various components of the computer, as will be described below. Primary volatile memory may be used by the secondary processor and the secondary graphics processor during the low power mode. Alternatively, secondary volatile memory, such as DRAM and/or embedded secondary volatile memory such as embedded DRAM can be used, as will be described below.

The primary processor and the primary graphics processor dissipate relatively high power when operating in the high power mode. The primary processor and the primary graphics processor execute a full-featured operating system (OS) that requires a relatively large amount of external memory. The primary processor and the primary graphics processor support high performance operation including complex computations and advanced graphics. The full-featured OS can be a Windows^{®}-based OS such as Windows XP^{®}, a Linux-based OS, a MAC^{®}-based OS and the like. The full-featured OS is stored in the HPDD 15 and/or 50.

The secondary processor and the secondary graphics processor dissipate less power (than the primary processor and primary graphics processor) during the low power mode. The secondary processor and the secondary graphics processor operate a restricted-feature operating system (OS) that requires a relatively small amount of external volatile memory. The secondary processor and secondary graphics processor may also use the same OS as the primary processor. For example, a pared-down version of the full-featured OS may be used. The secondary processor and the secondary graphics processor support lower performance operation, a lower computation rate and less advanced graphics. For example, the restricted-feature OS can be Windows CE^{®} or any other suitable restricted-feature OS. The restricted-feature OS is preferably stored in nonvolatile memory such as flash memory, a HDD with a non-volatile memory IF, a HPDD and/or a LPDD. In a preferred embodiment, the full-featured and restricted-feature OS share a common data format to reduce complexity.

The primary processor and/or the primary graphics processor preferably include transistors that are implemented using a fabrication process with a relatively small feature size. In one implementation, these transistors are implemented using an advanced CMOS fabrication process. Transistors implemented in the primary processor and/or primary graphics processor have relatively high standby leakage, relatively short channels and are sized for high speed. The primary processor and the primary graphics processor preferably employ predominantly dynamic logic. In other words, they cannot be shut down. The transistors are switched at a duty cycle that is less than approximately 20% and preferably less than approximately 10%, although other duty cycles may be used.

In contrast, the secondary processor and/or the secondary graphics processor preferably include transistors that are implemented with a fabrication process having larger feature sizes than the process used for the primary processor and/or primary graphics processor. In one implementation, these transistors are implemented using a regular CMOS fabrication process. The transistors implemented in the secondary processor and/or the secondary graphics processor have relatively low standby leakage, relatively long channels and are sized for low power dissipation. The secondary processor and the secondary graphics processor preferably employ predominantly static logic rather than dynamic logic. The transistors are switched at a duty cycle that is greater than 80% and preferably greater than 90%, although other duty cycles may be used.

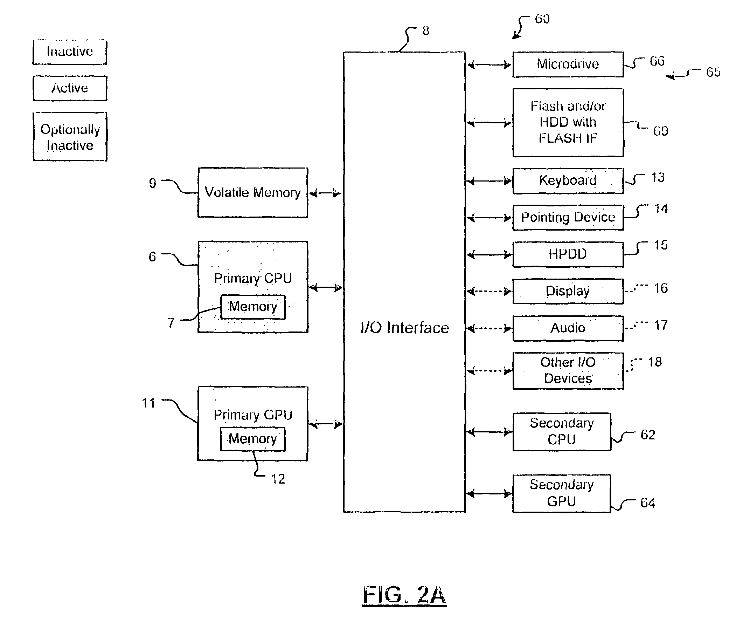

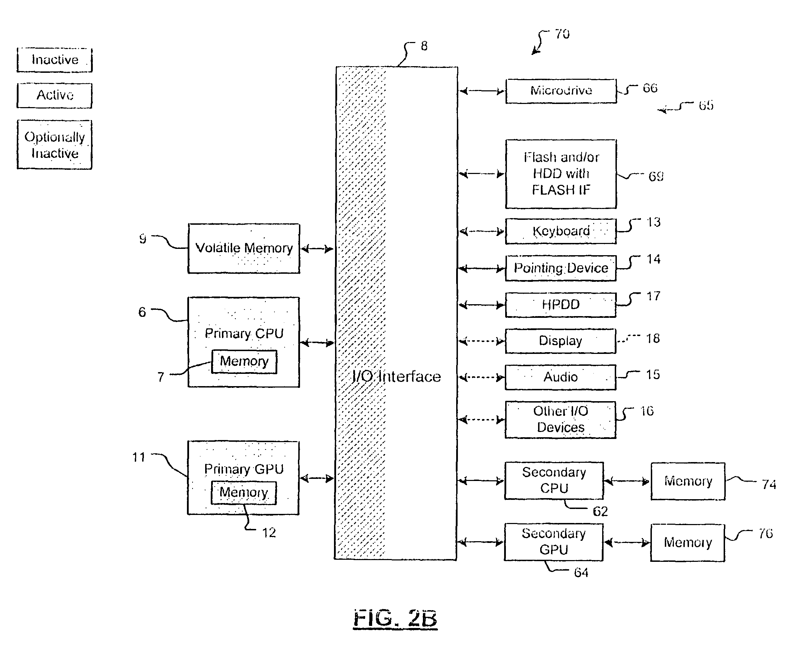

The primary processor and the primary graphics processor dissipate relatively high power when operated in the high power mode. The secondary processor and the secondary graphics processor dissipate less power when operating in the low power mode. In the low power mode, however, the computer architecture is capable of supporting fewer features and computations and less complex graphics than when operating in the high power mode. As can be appreciated by skilled artisans, there are many ways of implementing the computer architecture according to the present invention. Therefore, skilled artisans will appreciate that the architectures that are described below in conjunction with FIGs. 2A-4C are merely exemplary in nature and are not limiting.

Referring now to FIG. 2A, a first exemplary computer architecture 60 is shown. The primary processor 6, the volatile memory 9 and the primary graphics processor 11 communicate with the interface 8 and support complex data and graphics processing during the high power mode. A secondary processor 62 and a secondary graphics processor 64 communicate with the interface 8 and support less complex data and graphics processing during the low power mode. Optional nonvolatile memory 65 such as a LPDD 66 and/or flash memory and/or a HDD with a non-volatile memory IF 69 communicates with the interface 8 and provides low power nonvolatile storage of data during the low power and/or high power modes. The HDD with a non-volatile memory IF can be a LFDD and/or a HPDD. The HPDD 15 provides high power/capacity nonvolatile memory. The nonvolatile memory 65 and/or the HPDD 15 are used to store the restricted feature OS and/or other data and files during the low power mode.

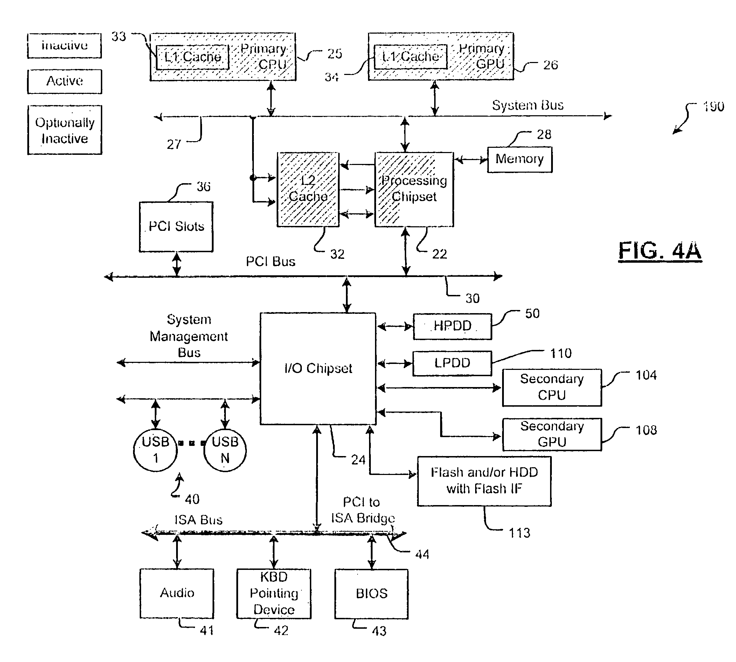

In this embodiment, the secondary processor 62 and the secondary graphics processor 64 employ the volatile memory 9 (or primary memory) while operating in the low-power mode. To that end, at least part of the interface 8 is powered during the low power mode to support communications with the primary memory and/or communications between components that are powered during the low power mode. For example, the keyboard 13, the pointing device 14 and the primary display 16 may be powered and used during the low power mode. In all of the embodiments described in conjunction with FIGs. 2A-4C, a secondary display with reduced capabilities (such as a monochrome display) and/or a secondary input/output device can also be provided and used during the low power mode.

Referring now to FIG. 2B, a second exemplary computer architecture 70 that is similar to the architecture in FIG. 2A is shown. In this embodiment, the secondary processor 62 and the secondary graphics processor 64 communicate with secondary volatile memory 74 and/or 76. The secondary volatile memory 74 and 76 can be DRAM or other suitable memory. During the low power mode, the secondary processor 62 and the secondary graphics processor 64 utilize the secondary volatile memory 74 and/or 76, respectively, in addition to and/or instead of the primary volatile memory 9 shown and described in FIG. 2A.

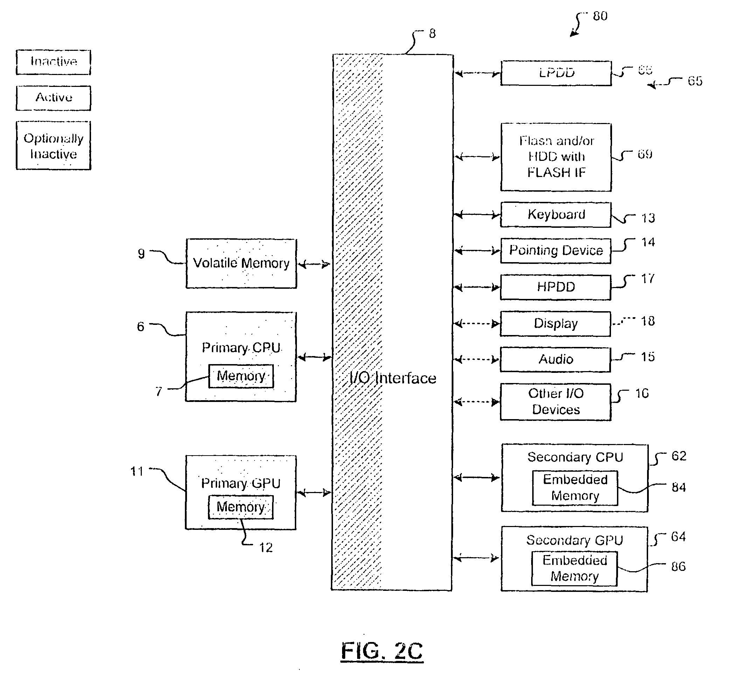

Referring now to FIG. 2C, a third exemplary computer architecture 80 that is similar to FIG. 2A is shown. The secondary processor 62 and/or secondary graphics processor 64 include embedded volatile memory 84 and 86, respectively. During the low power mode, the secondary processor 62 and the secondary graphics processor 64 utilize the embedded volatile memory 84 and/or 86, respectively, in addition to and/or instead of the primary volatile memory. In one embodiment, the embedded volatile memory 84 and 86 is embedded DRAM (eDRAM), although other types of embedded volatile memory can be used.

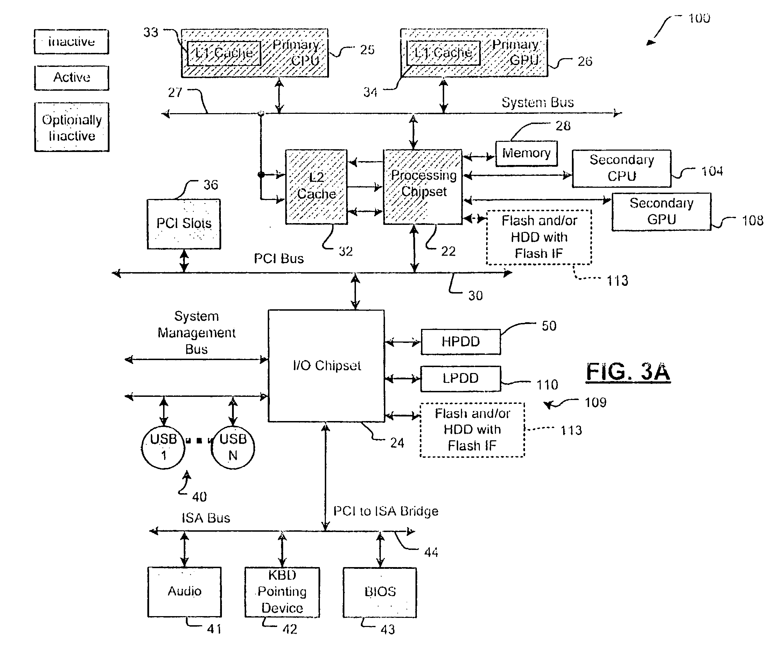

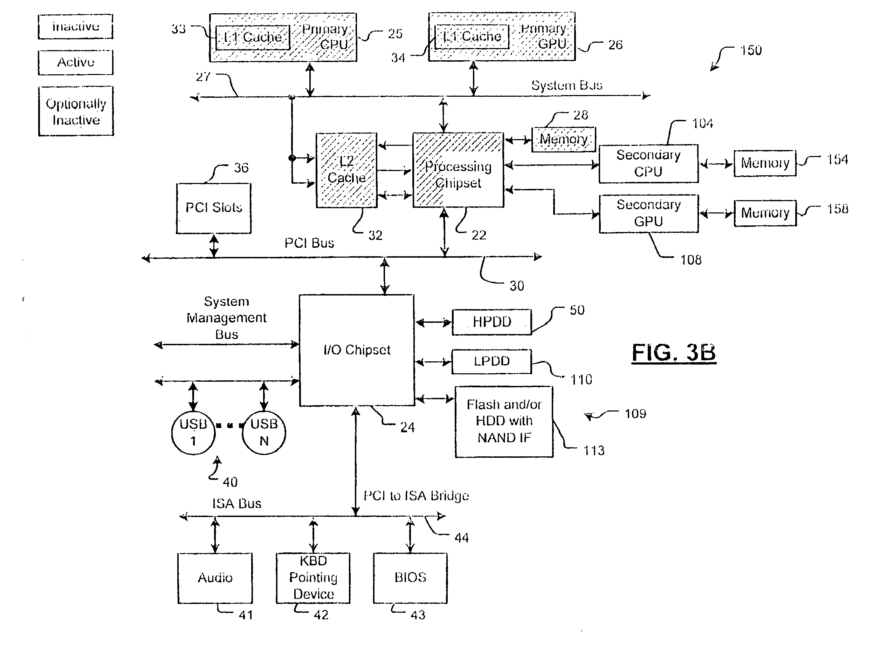

Referring now to FIG. 3A, a fourth exemplary computer architecture 100 according to the present invention is shown. The primary processor 25, the primary graphics processor 26, and the primary volatile memory 28 communicate with the processing chipset 22 and support complex data and graphics processing during the high power mode. A secondary processor 104 and a secondary graphics processor 108 support less complex data and graphics processing when the computer is in the low power mode. In this embodiment, the secondary processor 104 and the secondary graphics processor 108 employ the primary volatile memory 28 while operating in the low power mode. To that end, the processing chipset 22 may be fully and/or partially powered during the low power mode to facilitate communications therebetween. The HPDD 50 may be powered during the low power mode to provide high power volatile memory. Low power nonvolative memory 109 (L-PDD 110 and/or flash memory and/or HDD with a non-volatile memory IF 113) is connected to the processing chipset 22, the I/O chipset 24 or in another location and stores the restricted-feature operating system for the low power mode. The HDD with a non-volatile memory IF can be a LPDD and/or a HPDD.

The processing chipset 22 may be fully and/or partially powered to support operation of the HPDD 50, the LPDD 110, and/or other components that will be used during the low power mode. For example, the keyboard and/or pointing device 42 and the primary display may be used during the low power mode.

Referring now to FIG. 3B, a fifth exemplary computer architecture 150 that is similar to FIG. 3A is shown. Secondary volatile memory 154 and 158 is connected to the secondary processor 104 and/or secondary graphics processor 108, respectively. During the low power mode, the secondary processor 104 and the secondary graphics processor 108 utilize the secondary volatile memory 154 and 158, respectively, instead of and/or in addition to the primary volatile memory 28. The processing chipset 22 and the primary volatile memory 28 can be shut down during the low power mode if desired. The secondary volatile memory 154 and 158 can be DRAM or other suitable memory.

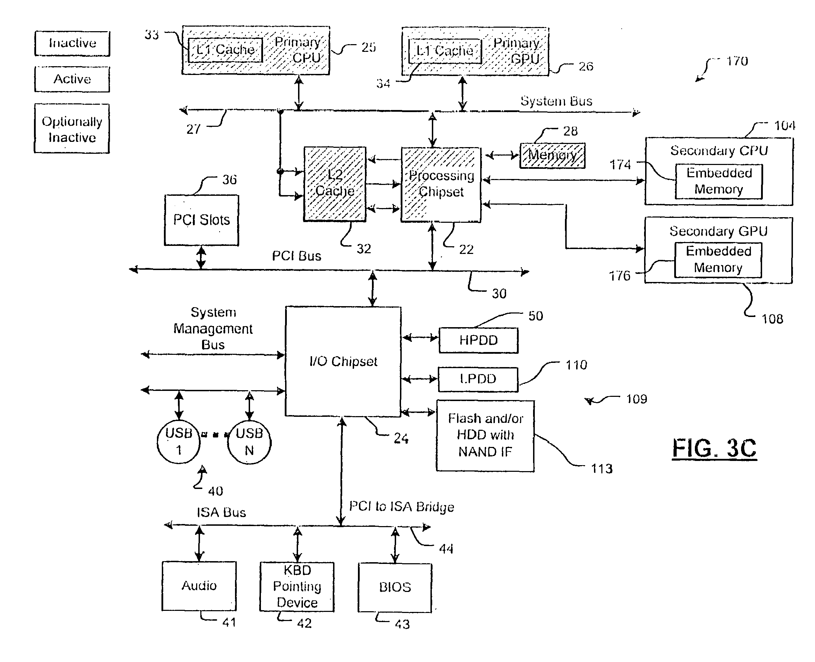

Referring now to FIG. 3C, a sixth exemplary computer architecture 170 that is similar to FIG. 3A is shown. The secondary processor 104 and/or secondary graphics processor 108 include embedded memory 174 and 176, respectively. During the low power mode, the secondary processor 104 and the secondary graphics processor 108 utilize the embedded memory 174 and 176, respectively, instead of and/or in addition to the primary volatile memory 28. in one embodiment, the embedded volatile memory 174 and 176 is embedded DRAM (eDRAM), although other types of embedded memory can be used.

Referring now to FIG. 4A, a seventh exemplary computer architecture 190 according to the present invention is shown. The secondary processor 104 and the secondary graphics processor 108 communicate with the I/O chipset 24 and employ the primary volatile memory 28 as volatile memory during the low power mode. The processing chipset 22 remains fully and/or partially powered to allow access to the primary volatile memory 28 during the low power mode.

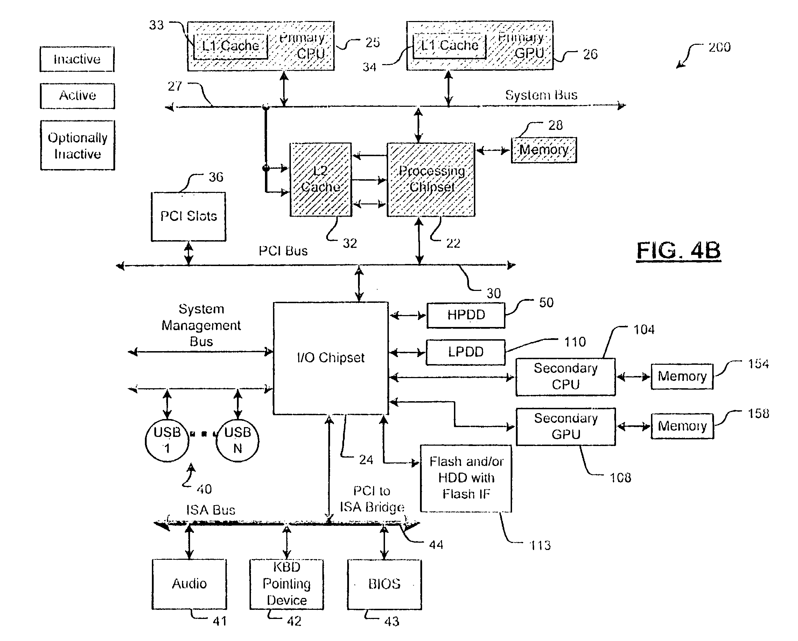

Referring now to FIG. 4B, an eighth exemplary computer architecture 200 that is similar to FIG. 4A is shown. Secondary volatile memory 154 and 158 is connected to the secondary processor 104 and the secondary graphics processor 108, respectively, and is used instead of and/or in addition to the primary volatile memory 28 during the low power mode. The processing chipset 22 and the primary volatile memory 28 can be shut down during the low power mode.

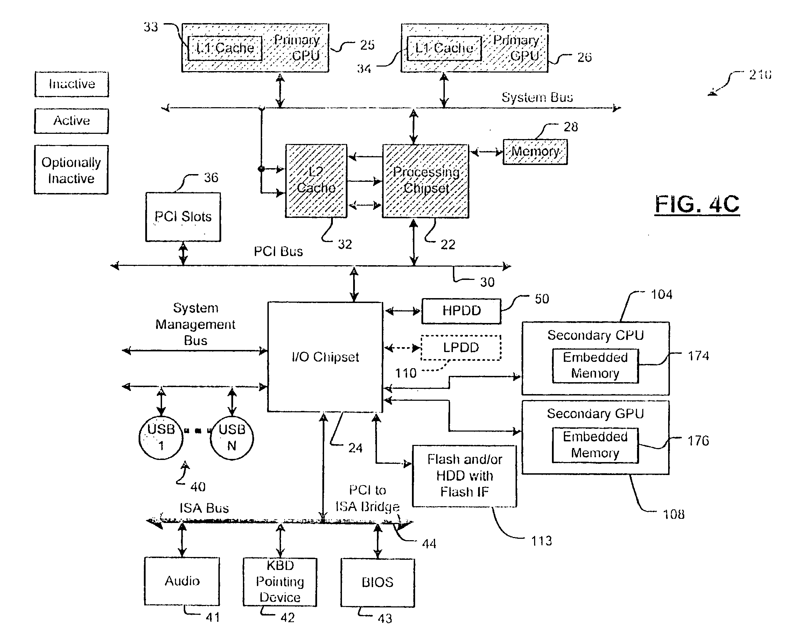

Referring now to FIG. 4C, a ninth exemplary computer architecture 210 that is similar to FIG. 4A is shown. Embedded volatile memory 174 and 176 is provided for the secondary processor 104 and/or the secondary graphics processor 108, respectively in addition to and/or instead of the primary volatile memory 28. In this embodiment, the processing chipset 22 and the primary volatile memory 28 can be shut down during the low power mode.

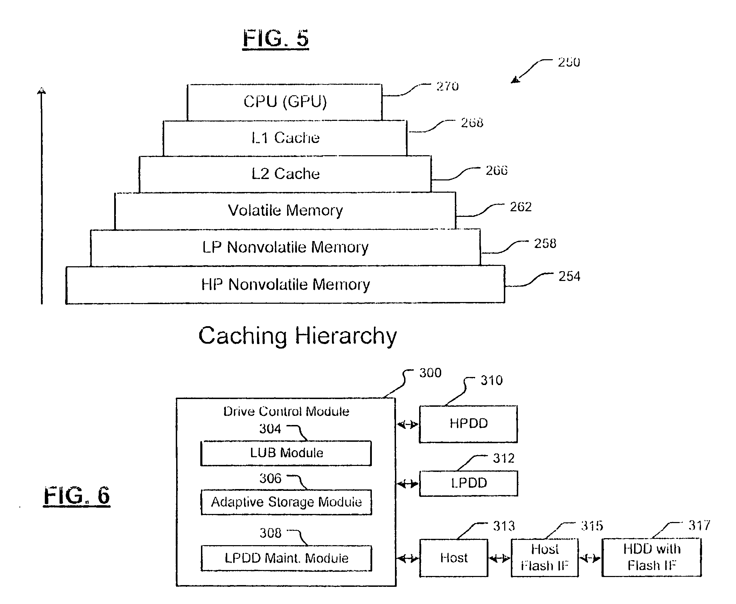

Referring now to FIG. 5, a caching hierarchy 250 for the computer architectures illustrated in FIGs. 2A-4C is shown. The HP nonvolatile memory HPDD 50 is located at a lowest level 254 of the caching hierarchy 250. Level 254 may or may not be used during the low power mode if the HPDD 50 is disabled and will be used if the HPDD 50 is enabled during the low power mode. The LP nonvolatile memory such as LPDD 110, flash memory and/or HDD with a non-volatile memory IF 113 is located at a next level 258 of the caching hierarchy 250. External volatile memory such as primary volatile memory, secondary volatile memory and/or secondary embedded memory is a next level 202 of the caching hierarchy 250, depending upon the configuration. Level 2 or secondary cache comprises a next level 266 of the caching hierarchy 250. Level 1 cache is a next level 268 of the caching hierarchy 250. The CPU (primary and/or secondary) is a last level 270 of the caching hierarchy. The primary and secondary graphics processor use a similar hierarchy.

The computer architecture according to the present invention provides a low power mode that supports less complex processing and graphics. As a result, the power dissipation of the computer can be reduced significantly. For laptop applications, battery life is extended.

Referring now to FIG. 6, a drive control module 300 or host control module for a multi-disk drive system includes a least used block (LUB) module 304, an adaptive storage module 306, and/or a LPDD maintenance module 308. The drive control module 300 controls storage and data transfer between a high-powered disk drive (HPDD) 310 such as a hard disk drive and a low-power disk drive (LPDD) 312 such as a microdrive based in part on LUB information. The drive control module 300 reduces power consumption by managing data storage and transfer between the HPDD and LPDD during the high and low power modes. As can be seen in FIG. 6, a HDD with a non-volatile memory IF 317 may be used as the LPDD and/or in addition to the LPDD. The drive control module 300 communicates with the HDD with a non-vclatile memory IF 317 via a host non-volatile memory IF 315 and a host 313. The drive control module 300 may be integrated with the host 313 and/or the host non-volatile memory IF 315.

The least used block module 304 keeps track of the least used block of data in the LPDD 312. During the low-power mode, the least used block module 304 identifies the least used block of data (such as files and/or programs) in the LPDD 312 so that it can be replaced when needed. Certain data blocks or files may be exempted from the least used block monitoring such as files that relate to the restricted-feature operating system only, blocks that are manually set to be stored in the LPDD 312, and/or other files and programs that are operated during the low power mode only. Still other criteria may be used to select data blocks to be overwritten, as will be described below.

During the low power mode during a data storing request the adaptive storage module 306 determines whether write data is more likely to be used before the least used blocks. The adaptive storage module 306 also determines whether read data is likely to be used only once during the low power mode during a data retrieval request. The LPDD maintenance module 308 transfers aged data from the LPDD to the HPDD during the high power mode and/or in other situations as will be described below.

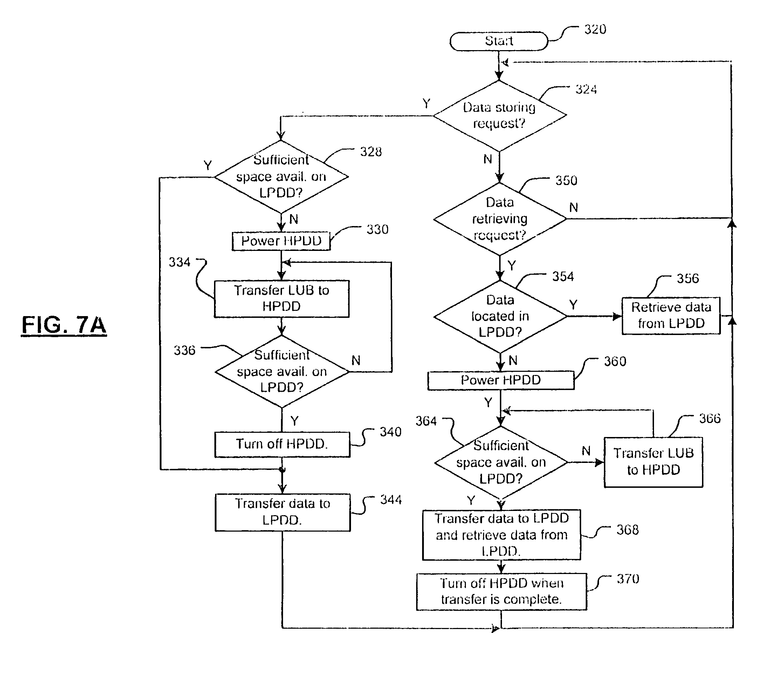

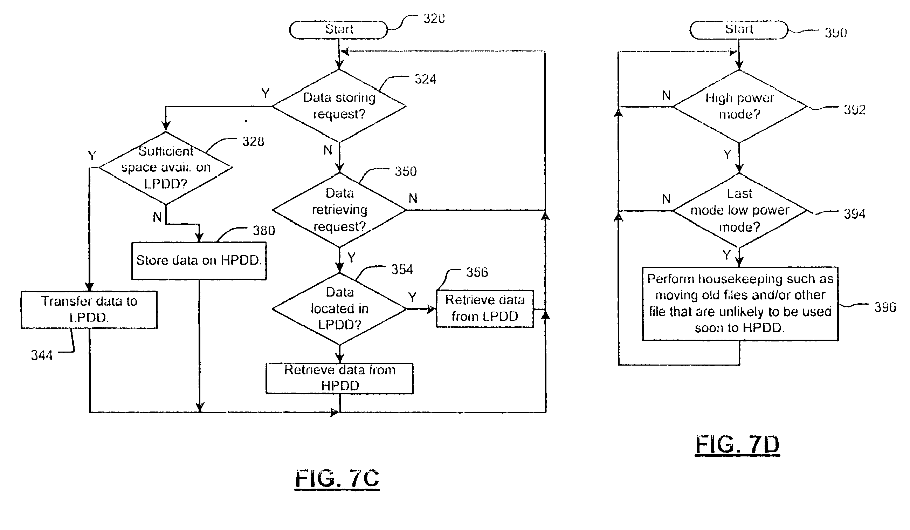

Referring now to FIG. 7A, steps performed by the drive control module 300 are shown. Control begins in step 320. In step 324, the drive control module 300 determines whether there is a data storing request. If step 324 is true, the drive control module 300 determines whether there is sufficient space available on the LPDD 312 in step 328. If not, the drive control module 300 powers the HPDD 310 in step 330. In step 334, the drive control module 300 transfers the least used data block to the HPDD 310. In step 336, the drive control module 300 determines whether there is sufficient space available on the LPDD 312. If not, control loops to step 334. Otherwise, the drive control module 300 continues with step 340 and turns off the HPDD 310. In step 344, data to be stored (e.g. from the host) is transferred to the LPDD 312.

If step 324 is false, the drive control module 300 continues with step 350 and determines whether there is a data retrieving request. If not, control returns to step 324. Otherwise, control continues with step 354 and determines whether the data is located in the LPDD 312. If step 354 is true, the drive control module 300 retrieves the data from the LPDD 312 in step 356 and continues with step 324. Otherwise, the drive control module 300 powers the HPDD 310 in step 360. In step 364, the drive control module 300 determines whether there is sufficient space available on the LPDD 312 for the requested data. If not, the drive control module 300 transfers the least used data block to the HPDD 310 in step 366 and continues with step 364. When step 364 is true, the drive control module 300 transfers data to the LPDD 312 and retrieves data from the LPDD 312 in step 368. In step 370, control turns off the HPDD 310 when the transfer of the data to the LPDD 312 is complete.

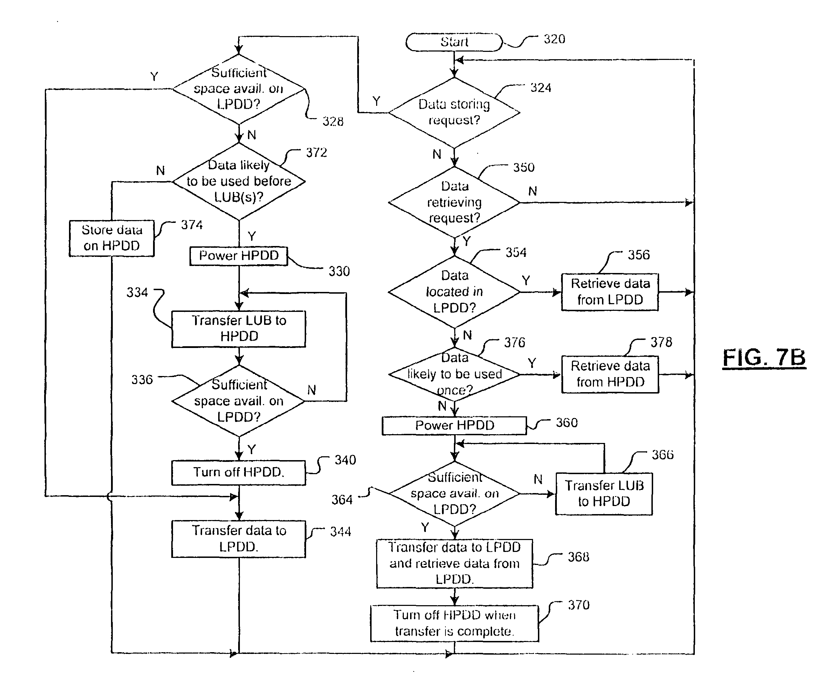

Referring now to FIG. 7B, a modified approach that is similar to that shown in FIG. 7A is used and includes one or more adaptive steps performed by the adaptive storage module 306. When there is sufficient space available on the LPDD in step 328, control determines whether the data to be stored is likely to be used before the data in the least used block or blocks that are identified by the least used block module in step 372. If step 372 is false, the drive control module 300 stores the data on the HPDD in step 374 and control continues with step 324. By doing so, the power that is consumed to transfer the least used blcck(s) to the LPDD is saved. If step 372 is true, control continues with step 330 as described above with respect to FIG. 7A.

When step 354 is false during a data retrieval request, control continues with step 376 and determines whether data is likely to be used once. If step 376 is true, the drive control module 300 retrieves the data from the HPDD in step 378 and continues with step 324. By doing so, the power that would be consumed to transfer the data to the LPDD is saved. If step 376 is false, control continues with step 360. As can be appreciated, if the data is likely to be used once, there is no need to move the data to the LPDD. The power dissipation of the HPDD, however, cannot be avoided.

Referring now to FIG. 7C, a more simplified form of control can also be performed during low power operation. Maintenance steps can also be performed during high power and/or low power modes (using the LPDD maintenance module 308). In step 328, when there is sufficient space available on the LPDD, the data is transferred to the LPDD in step 344 and control returns to step 324. Otherwise, when step 328 is false, the data is stored on the HPDD in step 380 and control returns to step 324. As can be appreciated, the approach illustrated in F!G. 7C uses the LPDD when capacity is available and uses the HPDD when LPDD capacity is not available. Skilled artisans will appreciate that hybrid methods may be employed using various combinations of the steps of FIGs. 7A-7D.

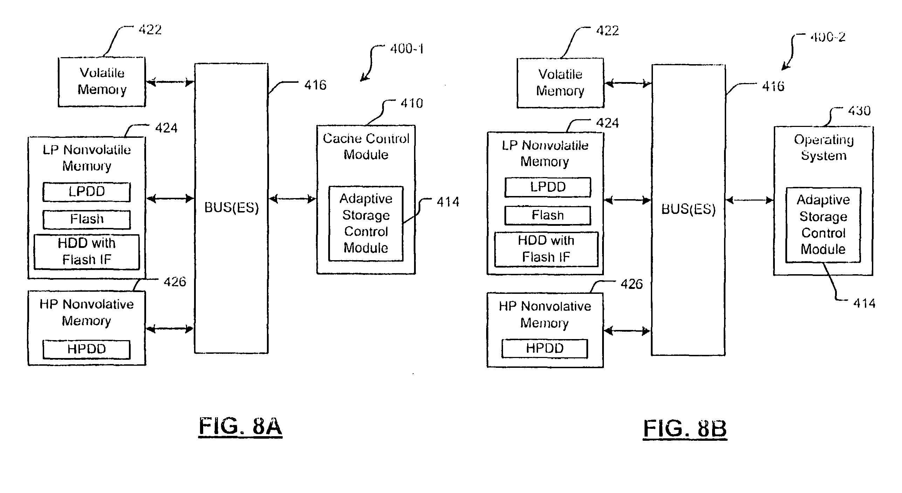

In FIG. 7D, maintenance steps are performed by the drive control module 300 upon returning to the high power mode and/or at other times to delete unused or low use files that are stored on the LPDD. This maintenance step can also be performed in the low power mode, periodically during use, upon the occurrence of an event such as a disk full event, and/or in other situations. Control begins in step 390. In step 392, control determines whether the high power mode is in use. If not, control loops back to step 7D. If step 392 is true, control determines whether the last mode was the low power mode in step 394. if not, control returns to step 392. If step 394 is false, control performs maintenance such as moving aged or low use files from the LPDD to the HPDD in step 396. Adaptive decisions may also be made as to which files are likely to be used in the future, for example using criteria described above and below in conjunction with FIGs. 8A-10.

Referring now to FIGs. 8A and 8B, storage control systems 400-1, 400-2 and 400-3 are shown. In FIG. 8A, the storage control system 400-1 includes a cache control module 410 with an adaptive storage control module 414. The adaptive storage control module 414 monitors usage of files and/or programs to determine whether they are likely to be used in the low power mode or the high power mode. The cache control module 410 communicates with one or more data buses 416, which in turn, communicate with volatile memory 422 such as L1 cache, L2 cache, volatile RAM such as DRAM and/or other volatile electronic data storage. The buses 416 also communicate with low power nonvolatile memory 424 (such as flash memory, a HDD with a non-volatile memory IF and/or a LPDD) and/or high power nonvolatile memory 426 such as a HPDD 426. in FIG. 8B, a full-featured and/or restricted feature operating system 430 is shown to include the adaptive storage control module 414. Suitable interfaces and/or controllers (not shown) are located between the data bus and the HPDD and/or LPDD.

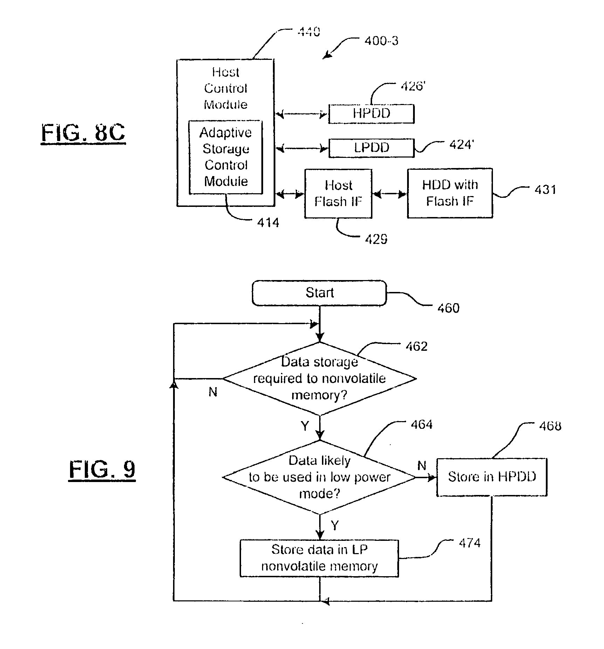

In FIG. 8C, a host control module 440 includes the adaptive storage control module 414. The host control module 440 communicates with a LPDD 426' and a hard disk drive 426'. The host control module 440 can be a drive control module, an integrated Device Electronics (IDE), ATA, serial ATA (SATA) or other controller. As can be seen in FIG. 8C, a HDD with a non-volatile memory IF 431 may be used as the LPDD and/or in addition to the LPDD. The host control module 440 communicates with the HDD with a non-volatile memory IF 431 via a host non-volatile memory IF 429. The host control module 440 may be integrated with the host non-volatile memory iF 429.

Referring now to FIG. 9, steps performed by the storage control systems in FIGs. 8A-8C are shown. In FIG. 9, control begins with step 460. In step 462, control determines whether there is a request for data storage to nonvolatile memory. If not, control loops back to step 462. Otherwise, the adaptive storage control module 414 determines whether data is likely to be used in the low-power mode in step 464. If step 464 is false, data is stored in the HPDD in step 468. If step 464 is true, the data is stored in the nonvolatile memory 444 in step 474.

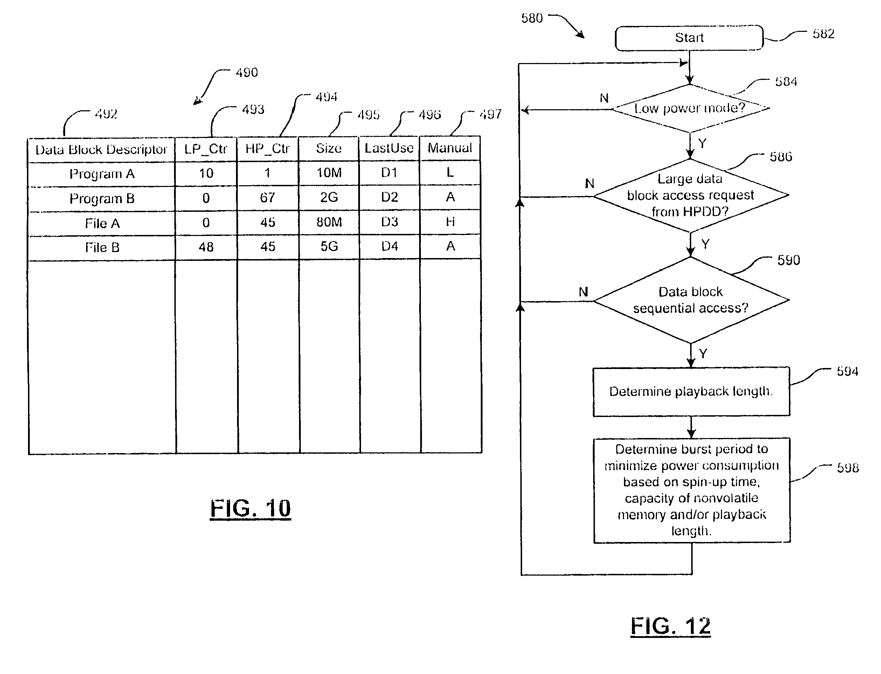

Referring now to FIG. 10, one way of determining whether a data block is likely to be used in the low-power mode is shown. A table 490 includes a data block descriptor field 492, a low-power counter field 493, a high-power counter field 494, a size field 495, a last use field 496 and/or a manual override field 497. When a particular program or file is used during the low-power or high-power modes, the counter field 493 and/or 494 is incremented. When data storage of the program or file is required to nonvolatile memory, the table 492 is accessed. A threshold percentage and/or count value may be used for evaluation. For example, if a file or program is used greater than 80 percent of the time in the low-power mode, the file may be stored in the low-power nonvolatile memory such as flash memory, a HDD with a non-volatile memory IF and/or the microdrive. If the threshold is not met, the file or program is stored in the high-power nonvolatile memory.

As can be appreciated, the counters can be reset periodically, after a predetermined number of samples (in other words to provide a rolling window), and/or using any other criteria. Furthermore, the likelihood may be weighted, otherwise modified, and/or replaced by the size field 495. In other words, as the file size grows, the required threshold may be increased because of the limited capacity of the LPDD.

Further modification of the likelihood of use decision may be made on the basis of the time since the file was last used as recorded by the last use field 496. A threshold date may be used and/or the time since last use may be used as one factor in the likelihood determination. While a table is shown in FIG. 10, one or more of the fields that are used may be stored in other locations and/or in other data structures. An algorithm and/or weighted sampling of two or more fields may be used.

Using the manual override field 497 allows a user and/or the operating system to manually override of the likelihood of use determination. For example, the manual override field may allow an L status for default storage in the LPDD, an H status for default storage in the HPDD and/or an A status for automatic storage decisions (as described above). Other manual override classifications may be defined. In addition to the above criteria, the current power level of the computer operating in the LPDD may be used to adjust the decision. Skilled artisans will appreciate that there are other methods for determining the likelihood that a file or program will be used in the high-power or low-power modes that fail within the teachings of the present invention.

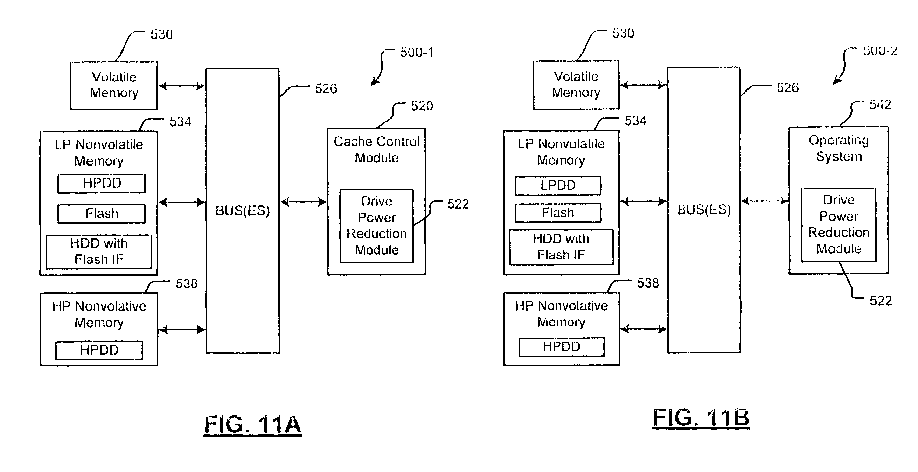

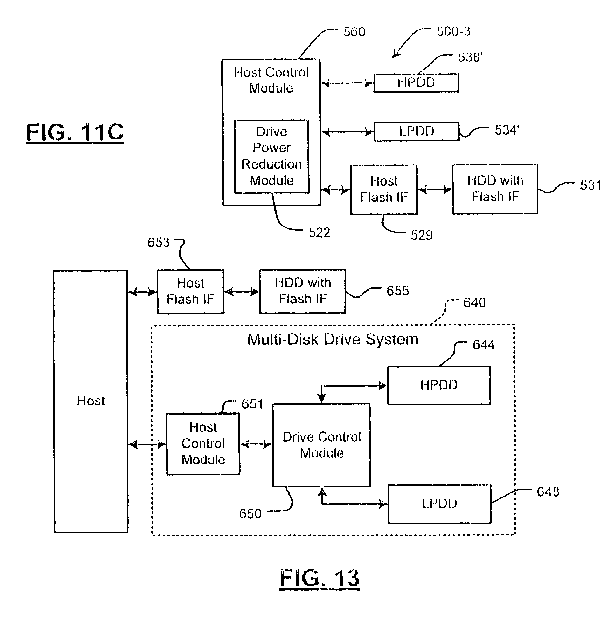

Referring new to FIGs. 11A and 11B, drive power reduction systems 500-1, 500-2 and 500-3 (collectively 500) are shown. The drive power reduction system 500 bursts segments of a larger sequential access file such as but not limited audio and/or video files to the low power nonvolatile memory on a periodic or other basis. In FIG. 11A, the drive power reduction system 500-1 includes a cache control module 520 with a drive power reduction control module 522. The cache control module 520 communicates with one or more data buses 526, which in turn, communicate with volatile memory 530 such as L1 cache, L2 cache, volatile RAM such as DRAM and/or other volatile electronic data storage, nonvolatile memory 534 such as flash memory, a HDD with a non-volatile memory iF and/or a LPDD, and a HPDD 538. In FIG. 11B, the drive power reduction system 500-2 includes a full-featured and/or restricted feature operating system 542 with a drive power reduction control module 522. Suitable interfaces and/or controllers (not shown) are located between the data bus and the HPDD and/or LPDD.

In FIG. 11C, the drive power reduction system 500-3 includes a host control module 560 with an adaptive storage control module 522. The host control module 560 communicates with one or more data buses 564, which communicate with the LPDD 534' and the hard disk drive 538'. The host control module 560 can be a drive control module, an Integrated Device Electronics (IDE), ATA, serial ATA (SATA) and/or other controller or interface. As can be seen in FIG. 11C, a HDD with a non-volatile memory IF 531 may be used as the LFDD and/or in addition to the LPDD. The host control module 560 communicates with the HDD with a non-volatile memory IF 531 via a host non-volatile memory IF 529. The host control module 560 may be integrated with the host non-volatile memory IF 529.

Referring now to FIG. 12, steps performed by the drive power reduction systems 500 in FIGs. 11A-11C are shown. Control begins the step 582. In step 584, control determines whether the system is in a low-power mode. If not, control loops back to step 584. If step 586 is true, control continues with step 586 where control determines whether a large data block access is typically requested from the HPDD in step 586. if not, control loops back to step 584. If step 586 is true, control continues with step 590 and determines whether the data block is accessed sequentially. If not, control loops back to 584. If step 590 is true, control continues with step 594 and determines the playback length. In step 598, control determines a burst period and frequency for data transfer from the high power nonvolatile memory to the low power nonvolatile memory.

In one implementation, the burst period and frequency are optimized to reduce power consumption. The burst period and frequency are preferably based upon the spin-up time of the HPDD and/or the LPDD, the capacity of the nonvolatile memory, the playback rate, the spin-up and steady state power consumption of the HPDD and/or LPDD, and/or the playback length of the sequential data block.

For example, the high power nonvolatile memory is a HPDD that consumes 1-2W during operation, has a spin-up time of 4-10 seconds and a capacity that is typically greater than 20Gb. The low power nonvolatile memory is a microdrive that consumes 0.3-0.5W during operation, has a spin-up time of 1-3 seconds, and a capacity of 1-6Gb. As can be appreciated, the forgoing performance values and/or capacities will vary for other implementations. The HPDD may have a data transfer rate of 1Gb/s to the microdrive. The playback rate may be 10Mb/s (for example for video files). As can be appreciated, the burst period times the transfer rate of the HPDD should not exceed the capacity of the microdrive. The period between bursts should be greater than the spin-up time plus the burst period. Within these parameters, the power consumption of the system can be optimized. In the low power mode, if the HPDD is operated to play an entire video such as a movie, a significant amount of power is consumed. Using the method described above, the power dissipation can be reduced significantly by selectively transferring the data from the HPDD to the LPDD in multiple burst segments spaced at fixed intervals at a very high rate (e.g., 100X the playback rate) and then the HPDD can be shut down. Power savings that are greater than 50% can easily be achieved.

Referring now to FIG. 13, a multi-disk drive system 640 according to the present invention is shown to include a drive control module 650 and one or more HPDD 644 and one or more LPDD 648. The drive control module 650 communicates with a host device via host control module 651. To the host, the muiti-disk drive system 640 effectively operates the HPDD 644 and LPDD 648 as a unitary disk drive to reduce complexity, improve performance and decrease power consumption, as will be described below. The host control module 651 can be an IDE, ATA, SATA and/or other control module or interface.

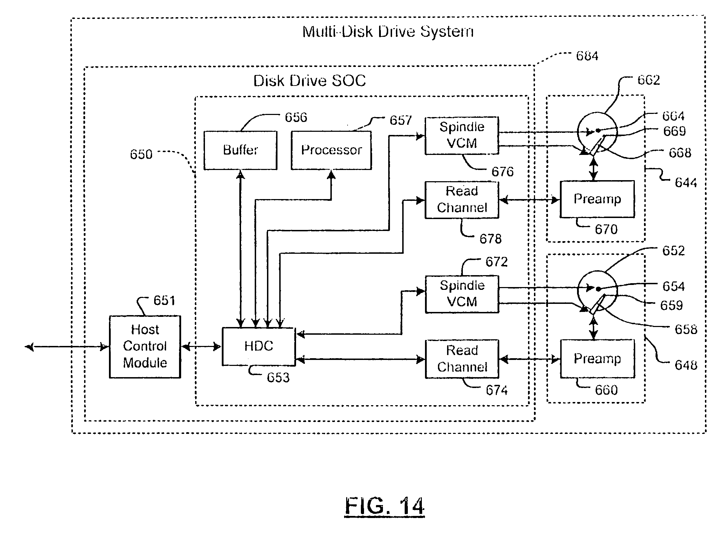

Referring now to FIG. 14, in one implementation the drive control module 650 includes a hard disk controller (HDC) 653 that is used to control one or both of the LPDD and/or HPDD. A buffer 656 stores data that is associated the control of the HPDD and/or LPDD and/or aggressively buffers data to/from the HPDD and/or LPDD to increase data transfer rates by optimizing data block sizes. A processor 657 performs processing that is related to the operation of the HPDD and/or LPDD.

The HPDD 648 includes one or more platters 652 having a magnetic coating that stores magnetic fields. The platters 652 are rotated by a spindle motor that is schematically shown at 654. Generally the spindle motor 654 rotates the platter 652 at a fixed speed during the read/write operations. One or more read/write arms 658 move relative to the platters 652 to read and/or write data to/from the platters 652. Since the HPDD 648 has larger platters than the LPDD, more power is required by the spindle motor 654 to spin-up the HPDD and to maintain the HPDD at speed. Usually, the spin-up time is higher for HPDD as well.

A read/write device 659 is located near a distal end of the read/write arm 658. The read/write device 659 includes a write element such as an inductor that generates a magnetic field. The read/write device 659 a!so includes a read element (such as a magneto-resistive (MR) element) that senses the magnetic field on the platter 652. A preamp circuit 660 amplifies analog read/write signals.

When reading data, the preamp circuit 660 amplifies low level signals from the read element and outputs the ampiified signal to the read/write channel device. While writing data, a write current is generated that flows through the write element of the read/write device 659 and is switched to produce a magnetic field having a positive or negative polarity. The positive or negative polarity is stored by the platter 652 and is used to represent data. The LPDD 644 also includes one or more platters 662, a spindle motor 664, one or more read/write arms 668, a read/write device 669, and a preamp circuit 670.

The HDC 653 communicates with the host control module 651 and with a first spindle/voice coil motor (VCM) driver 672, a first read/write channel circuit 674, a second spindle/VCM driver 676, and a second read/write channel circuit 678. The host control module 651 and the drive control module 650 can be implemented by a system on chip (SOC) 684. As can be appreciated, the spindle VCM drivers 672 and 676 and/or read/write channel circuits 674 and 678 can be combined. The spindle/VCM drivers 672 and 676 control the spindle motors 654 and 664, which rotate the platters 652 and 662, respectively. The spindle/VCM drivers 672 and 676 also generate control signals that position the read/write arms 658 and 668, respectively, for example using a voice coil actuator, a stepper motor or any other suitable actuator.

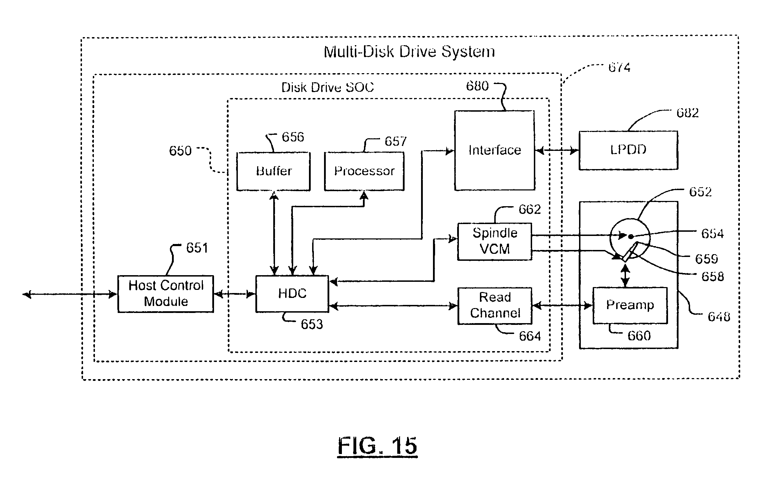

Referring now to FIGs. 15-17, other variations of the multi-disk drive system are shown. In FIG. 15, the drive control module 650 may include a direct interface 680 for providing an external connection to one or more LPDD 682. In one implementation, the direct interface is a Peripheral Component interconnect (PCI) bus, a PCI Express (PCIX) bus, and/or any other suitable bus or interface.

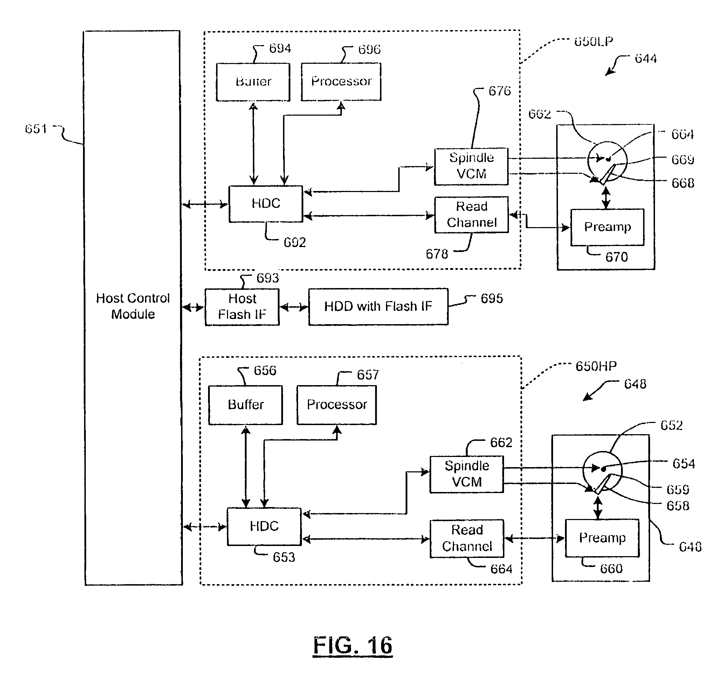

In FIG. 16, the host control module 651 communicates with both the LPDD 644 and the HPDD 648. A low power drive control module 650LP and a high power disk drive control module 650HP communicate directly with the host control module. Zero, one or both of the LP and/or the HP drive control modules can be implemented as a SOC. As can be seen in FIG. 16, a HDD with a non-volatile memory IF 695 may be used as the LPDD and/or in addition to the LPDD. The host control module 651 communicates with the HDD with a non-volatile memory IF 695 via a host non-volatile memory IF 693. The host control module 651 may be integrated with the host non-volatile memory IF 693.

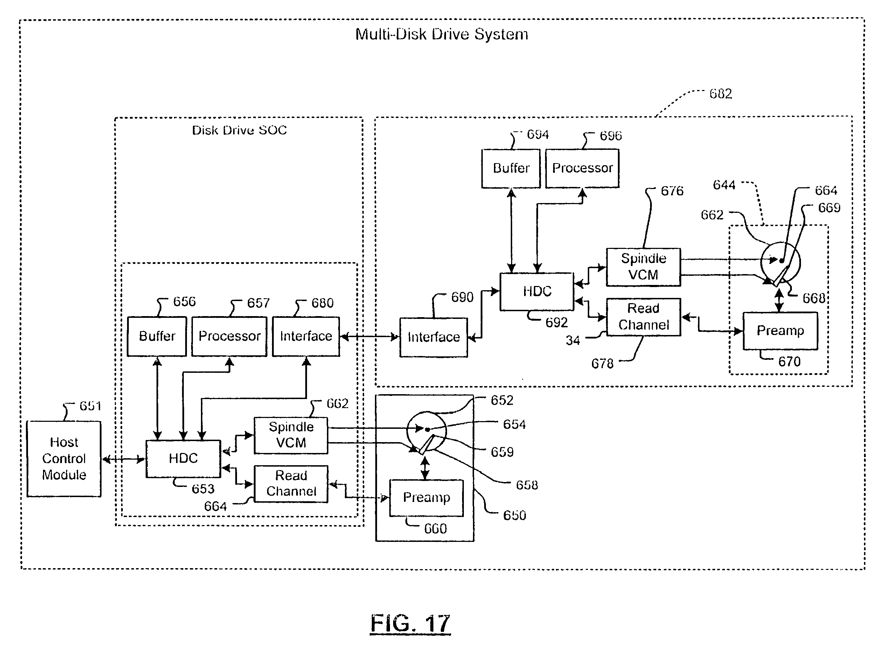

In FIG. 17, one exemplary LPDD 682 is shown to include an interface 690 that supports communications with the direct interface 680. As set forth above, the interfaces 680 and 690 can be a Peripheral Component Interconnect (PCI) bus, a PCI Express (PCIX) bus, and/or any other suitable bus or interface. The LPDD 682 includes an HDC 692, a buffer 694 and/or a processor 696. The LPDD 682 also includes the spindle/VCM driver 676, the read/write channel circuit 678, the platter 662, the spindle motor 665, the read/write arm 668, the read element 669, and the preamp 670, as described above. Alternately, the HDC 653, the buffer 656 and the processor 658 can be combined and used for both drives. Likewise the spindle/VCM driver and read channel circuits can optionally be combined. In the embodiments in FIGs. 13-17, aggressive buffering of the LPDD is used to increase performance. For example, the buffers are used to optimize data block sizes for optimum speed over host data buses.

In conventional computer systems, a paging file is a hidden file on the HPDD or HP nonvolatile memory that is used by the operating system to hold parts of programs and/or data files that do not fit in the volatile memory of the computer. The paging file and physical memory, or RAM, define virtual memory of the computer. The operating system transfers data from the paging file to memory as needed and returns data from the volatile memory to the paging file to make room for new data. The paging file is also called a swap file.

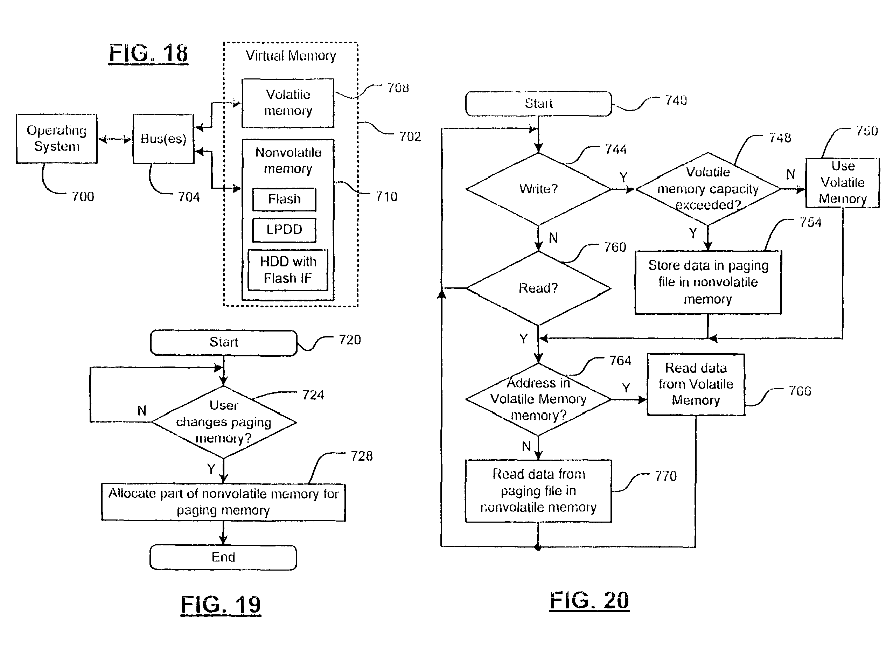

Referring now to FIGs. 18-20, the present invention utilizes the LP nonvolatile memory such as the LPDD, a HDD with a non-volatile memory IF and/or flash memory to increase the virtual memory of the computer system. In FIG. 18, an operating system 700 allows a user to define virtual memory 702. During operation, the operating system 700 addresses the virtual memory 702 via one or more buses 704. The virtual memory 702 includes both volatile memory 708 and LP nonvolatile memory 710 such as flash memory, a HDD with a non-volatile memory IF and/or a LPDD.

Referring now to FIG. 19, the operating system allows a user to allocate some or all of the LP nonvolatile memory 710 as paging memory to increase virtual memory. In step 720, control begins. In step 724, the operating system determines whether additional paging memory is requested. If not, control loops back to step 724. Otherwise, the operating system allocates part of the LP nonvolatile memory for paging file use to increase the virtual memory in step 728.

In FIG. 20, the operating system employs the additional LP nonvolatile memory as paging memory. Control begins in step 740. In step 744, control determines whether the operating system is requesting a data write operation. If true, control continues with step 748 and determines whether the capacity of the volatile memory is exceeded. If not, the volatile memory is used for the write operation in step 750. If step 748 is true, data is stored in the paging file in the LP nonvolatile memory in step 754. If step 744 is false, control continues with step 760 and determines whether a data read is requested. If false, control loops back to step 744. Otherwise, control determines whether the address corresponds to a RAM address in step 764. If step 764 is true, control reads data from the volatile memory in step 764 and continues with step 744. If step 764 is false, control reads data from the paging file in the LP nonvolatile memory in step 770 and control continues with step 744.

As can be appreciated, using LP nonvolatile memory such as flash memory, a HDD with a non-volatile memory IF and/or the LPDD to increase the size of virtual memory will increase the performance of the computer as compared to systems employing the HPDD. Furthermore, the power consumption will be lower than systems using the HPDD for the paging file. The HPDD requires additional spin-up time due to its increased size, which increases data access times as compared to the flash memory, which has no spin-up latency, and/or the LPCD or a LPDD HDD with a non-volatile memory IF, which has a shorter spin-up time and lower power dissipation.

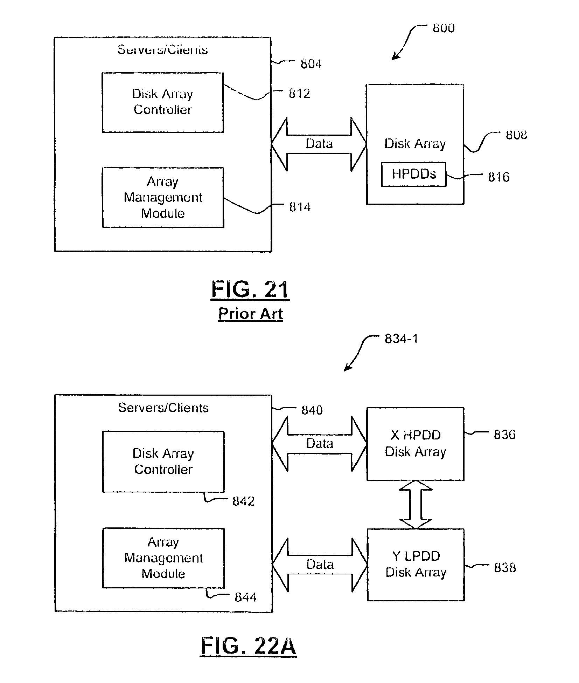

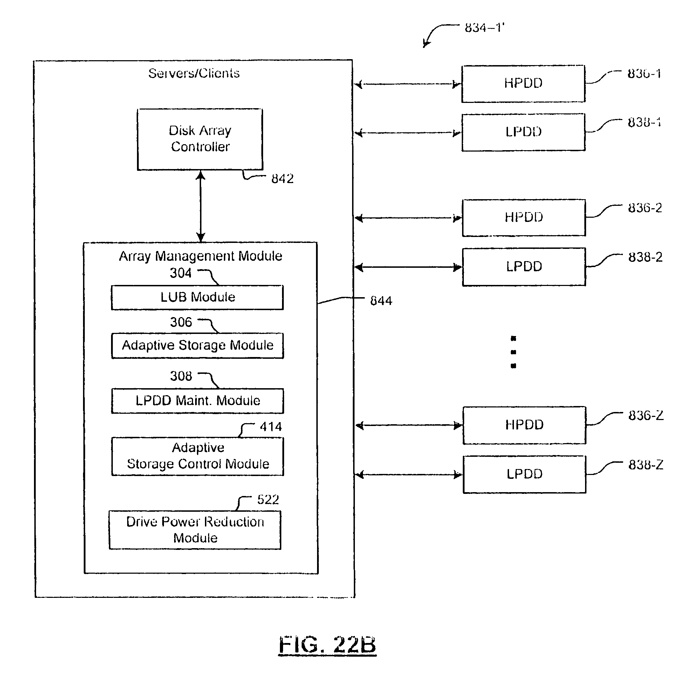

Referring now to FIG. 21, a Redundant Array of independent Disks (RAID) system 800 is shown to include one or more servers and/or clients 304 that communicate with a disk array 808. The one or more servers and/or clients 804 include a disk array controller 812 and/or an array management module 814. The disk array controller 812 and/or the array management module 814 receive data and perform logical to physical address mapping of the data to the disk array 808. The disk array typically includes a plurality of HPDD 816.

The multiple HPDDs 816 provide fault tolerance (redundancy) and/or improved data access rates. The RAID system 800 provides a method of accessing multiple individual HPDDs as if the disk array 808 is one large hard disk drive. Collectively, the disk array 808 may provide hundreds of Gb to 10's to 100's of Tb of data storage. Data is stored in various ways on the multiple HPDGs 816 to reduce the risk of losing all of the data if one drive fails and to improve data access time.

The method of storing the data on the HPDDs 816 is typically called a RAID level. There are various RAID levels including RAID level 0 or disk striping. In RAID level 0 systems, data is written in blocks across multiple drives to allow one drive to write or read a data block while the next is seeking the next block. The advantages of disk striping include the higher access rate and full utilization of the array capacity. The disadvantage is there is no fault tolerance. If one drive fails, the entire contents of the array become inaccessible.

RAID level 1 or disk mirroring provides redundancy by writing twice - once to each drive. If one drive fails, the other contains an exact duplicate of the data and the RAID system can switch to using the mirror drive with no lapse in user accessibility. The disadvantages include a lack of improvement in data access speed and higher cost due to the increased number of drives (2N) that are required. However, RAID level 1 provides the best protection of data since the array management software will simply direct all application requests to the surviving HPDDs when one of the HPDDs fails.

RAID level 3 stripes data across multiple drives with an additional drive dedicated to parity, for error correction/recovery. RAID level 5 provides striping as well as parity for error recovery. In RAID level 5, the parity block is distributed among the drives of the array, which provides more balanced access load across the drives. The parity information is used to recovery data if one drive fails. The disadvantage is a relatively slow write cycle (2 reads and 2 writes are required for each block written). The array capacity is N-1, with a minimum of 3 drives required.

RAID level 0+1 involves stripping and mirroring without parity. The advantages are fast data access (like RAID level 0), and single drive fault tolerance (like RAID level 1). RAID level 0+1 still requires twice the number of disks (like RAID level 1). As can be appreciated, there can be other RAID levels and/or methods for storing the data on the array 808.

Referring now to FIGs. 22A and 22B, a RAID system 834-1 according to the present invention includes a disk array 836 that includes X HPDD and a disk array 838 that includes Y LPDD. One or more clients and/or a servers 840 include a disk array controller 842 and/or an array management module 844. While separate devices 842 and 844 are shown, these devices can be integrated if desired. As can be appreciated, X is greater than or equal to 2 and Y is greater than or equal to 1. X can be greater than Y, less than Y and/or equal to Y. For example, FIG. 22B shows a RAID system 834-1' where X = Y = Z.

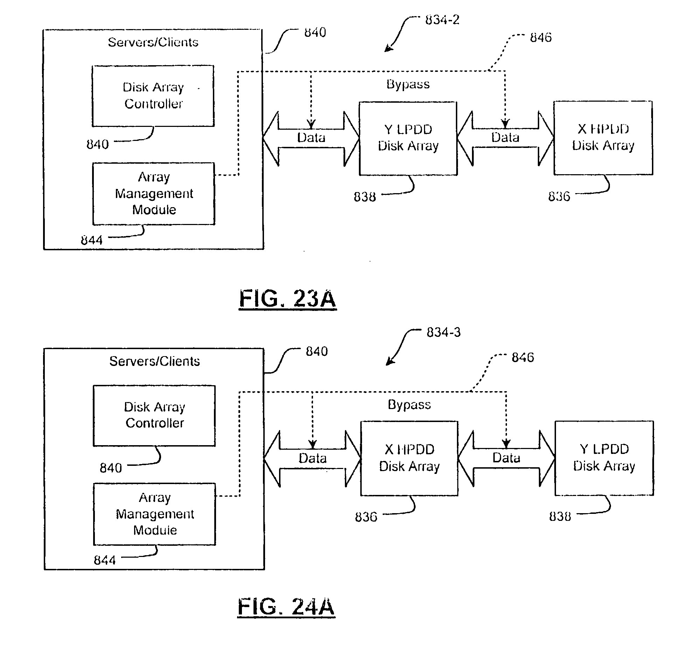

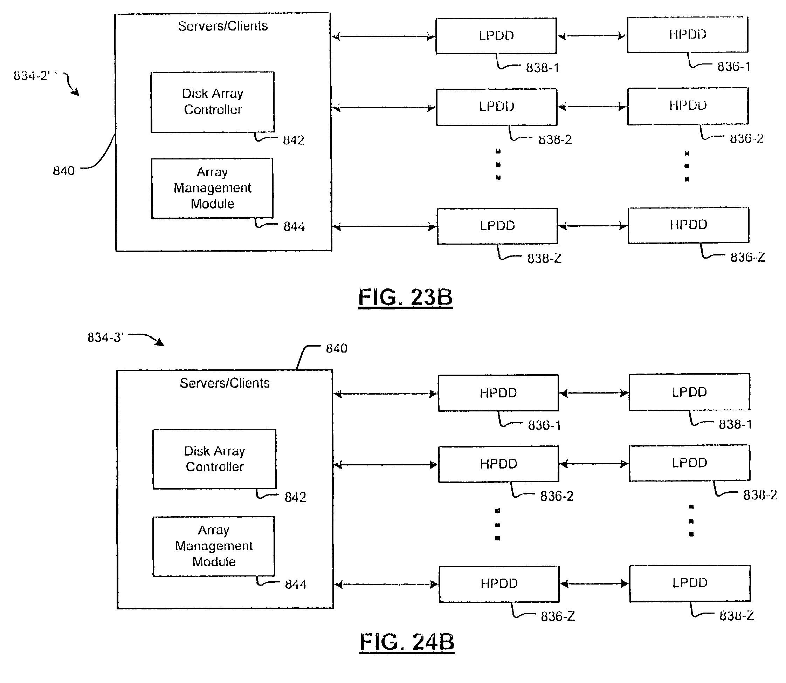

Referring now to FIGs. 23A, 23B, 24A and 24B, RAID systems 834-2 and 834-3 are shown. In FIG. 23A, the LPDD disk array 838 communicates with the servers/clients 840 and the HPDD disk array 836 communicates with the LPDD disk array 838. The RAID system 834-2 may include a management bypass path that selectively circumvents the LPDD disk array 838. As can be appreciated, X is greater than or equal to 2 and Y is greater than or equal to 1. X can be greater than Y, less than Y and/or equal to Y. For example, FIG. 23B shows a RAID system 834-2' where X = Y = Z. In FIG. 24A, the HPDD disk array 836 communicates with the servers/clients 840 and the LPDD disk array 838 communicates with the HPDD disk array 836. The RAID system 834-2 may include a management bypass path shown by dotted line 846 that selectively circumvents the LPDD disk array 838. As can be appreciated, X is greater than or equal to 2 and Y is greater than or equal to 1. X can be greater than Y, less than Y and/or equal to Y. For example, FIG. 24B shows a RAID system 834-3' where X = Y = Z. The strategy employed may include write through and/or write back in FIGs. 23A-24B.

The array management module 844 and/or the disk controller 842 utilizes the LPDD disk array 838 to reduce power consumption of the HPDD disk array 836. Typically, the HPDD disk array 808 in the conventicnal RAID system in FIG. 21 is kept on at all times during operation to support the required data access times. As can be appreciated, the HPDD disk array 808 dissipates a relatively high amount of power. Furthermore, since a large amount cf data is stored in the HPDD disk array 808, the platters of the HPDDs are typically as large as possible, which requires higher capacity spindle motors and increases the data access times since the read/write arms move further on average.

According to the present invention, the techniques that are described above in conjunction with FIGs. 6-17 are selectively employed in the RAID system 834 as shown in FIG. 22B to reduce power consumption and data access times. While not shown in FIGs. 22A and 23A-24B, the other RAID systems according to the present invention may also use these techniques. In other words, the LUB module 304, adaptive storage module 306 and/or the LPDD maintenance module that are described in FIGs. 6 and 7A-7D are selectively implemented by the disk array controller 842 and/or the array management controller 844 to selectively store data on the LPDD disk array 838 to reduce power consumption and data access times. The adaptive storage control module 414 that is described in FIGs. 8A-8C, 9 and 10 may also be selectively implemented by the disk array controller 842 and/or the array management controller 844 to reduce power consumption and data access times. The drive power reduction module 522 that is described FIGs. 11A-11C and 12 may also be implemented by the disk array controller 842 and/or the array management controller 844 to reduce power consumption and data access times. Furthermore, the multi-drive systems and/or direct interfaces that are shown in FIGs. 13-17 may be implemented with one or more of the HPDD in the HPDD disk array 836 to increase functionality and to reduce power consumption and access times.

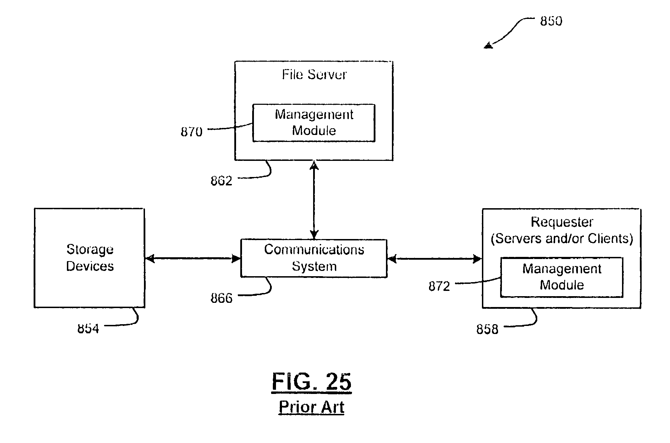

Referring now to FIG. 25, a network attached storage (NAS) system 850 according to the prior art is shown to include storage devices 854, storage requesters 858, a file server 862, and a communications system 866. The storage devices 854 typically include disc drives, RAID systems, tape drives, tape libraries, optical drives, jukeboxes, and any other storage devices to be shared. The storage devices 854 are preferably but not necessarily object oriented devices. The storage devices 854 may include an I/O interface for data storage and retrieval by the requesters 858. The requesters 858 typically include servers and/or clients that share and/or directly access the storage devices 854.

The file server 862 performs management and security functions such as request authentication and resource location. The storage devices 854 depend on the file server 862 for management direction, while the requesters 858 are relieved of storage management to the extent the file server 862 assumes that responsibility. In smaller systems, a dedicated file server may not be desirable. In this situation, a requester may take on the responsibility for overseeing the operation of the NAS system 850. As such, both the file server 862 and the requester 858 are shown to include management modules 870 and 372, respectively, though one or the other and/or both may be provided. The communications system 866 is the physical infrastructure through which components of the NAS system 850 communicate. It preferably has properties of both networks and channels, has the ability to connect all components in the networks and the low latency that is typically found in a channel.

When the NAS system 850 is powered up, the storage devices 854 identify themselves either to each other or to a common point of reference, such as the file server 862, one or more of the requesters 858 and/or to the communications system 866. The communications system 866 typically offers network management techniques to be used for this, which are accessible by connecting to a medium associated with the communications system. The storage devices 854 and requesters 858 log onto the medium. Any component wanting to determine the operating configuration can use medium services to identify all other components. From the file server 862, the requesters 858 learn of the existence of the storage devices 854 they could have access to, while the storage devices 854 learn where to go when they need to locate another device or invoke a management service like backup. Similarly the file server 862 can learn of the existence of storage devices 854 from the medium services. Depending on the security of a particular installation, a requester may be denied access to some equipment. From the set of accessible storage devices, it can then identify the files, databases, and free space available.

At the same time, each NAS component can identify to the file server 862 any special considerations it would like known. Any device level service attributes could be communicated once to the file server 862, where all other components could learn of them. For instance, a requester may wish to be informed of the introduction of additional storage subsequent to startup, this being triggered by an attribute set when the requester logs onto the file server 362. The file server 862 could do this automatically whenever new storage devices are added to the configuration, including conveying important characteristics, such as it being RAID 5, mirrored, and so on.

When a requester must open a file, it may be able to go directly to the storage devices 854 or it may have to go to the file server for permission and location information. To what extent the file server 854 controls access to storage is a function of the security requirements of the installation.

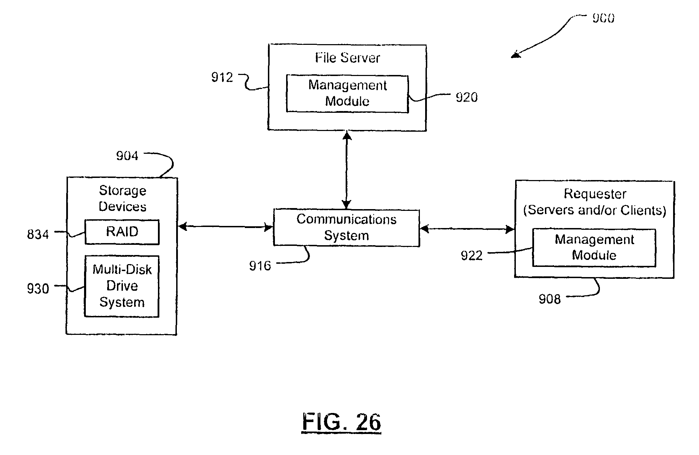

Referring now to FIG. 26, a network attached storage (NAS) system 900 according to the present invention is shown to include storage devices 904, requesters 908, a file server 912, and a communications system 916. The storage devices 904 include the RAID system 834 and/or multi-disk drive systems 930 described above in FIGs. 6-19. The storage devices 904 typically may also include disc drives, RAID systems, tape drives, tape libraries, optical drives, jukeboxes, and/or any other storage devices to be shared as described above. As can be appreciated, using the improved RAID systems and/or multi-disk drive systems 930 will reduce the power consumption and data access times of the NAS system 900.

Referring flow to FIG. 27, a disk drive controller incorporating a non-volatile memory and disk drive interface controller is shown, In other words, the HDD of FIG. 27 has a non-volatile memory interface (hereinafter called HDD with non-volatile memory interface (IF)). The device of FIG. 27 allows a HDD to be connected to an existing non-volatile memory interface (IF) of a host device to provide additional nonvolatile storage.

The disk drive controller 1100 communicates with a host 1102 and a disk drive 1104. The HDD with a non-volatile memory IF includes the disk drive controller 1100 and the disk drive 1104. The disk drive 1104 typically has an ATA, ATA-CE, or IDE type interface. Also coupled to the disk drive controller 1100 is an auxiliary non-volatile memory 1106, which stores firmware code for the disk drive controller. In this case, the host 1102, while shown as a single block, typically includes as relevant components an industry standard non-volatile memory slot (connector) of the type for connecting to commercially available non-volatile memory devices, which in turn is connected to a standard non-volatile memory controller in the host. This slot typically conforms to one of the standard types, for instance, MMC (Multi Media Card), SD (Secure Data), SD/MMC which is a combination of SD and MMC, HS-MMC (High Speed-MMC), SD/HS-MMC which is a combination of SD and HS-MMC, and Memory Stick. This list is not limiting.

A typical application is a portable computer or consumer electronic device such as MP3 music player or cellular telephone handset that has one application processor that communicates with an embedded non-volatile memory through a non-volatile memory interface. The non-volatile memory interface may include a flash interface, a NAND flash interface and/or other suitable non-volatile semiconductor memory interfaces. In accordance with this disclosure, rather than a non-volatile semiconductor memory, a hard disk drive or other type of disk drive is provided replacing the non-volatile semiconductor memory and using its interface signals. The disclosed method provides a non-volatile memery-like interface for a disk drive, which makes it easier to incorporate a disk drive in such a host system which normally only accepts flash memory. One advantage of a disk drive over flash memory as a storage device is far greater storage capacity for a particular cost.

Only minimum changes in the host non-volatile memory controller firmware and software need be made to incorporate the disk drive using the disclosed interface controller. Also, minimum command overhead is provided. Advantageously, there is open-ended data transfer for any particular read or write operation, in terms of the number of logic blocks transferred between the host and the disk drive. Also, no sector count of the disk drive need be provided by the host.

In certain embodiments the disk drive 1104 may be a small form factor (SFF) hard disk drive, which typically has a physical size of 650 x 15 x 70 mm. A typical data transfer rate of such SSF hard disk drive is 25 megabytes per second.

The functions of the disk drive controller 1100 of FIG. 27 are further explained below. The disk drive controller 1100 includes an interface controller 1110, which presents to the host system 1102 as a flash memory controller with a 14-line bus. The interface controller 1110 also performs the functions of host command interpretation and data flow control between the host 1102 and a buffer manager 1112. The buffer manager circuit 1112 controls, via a memory controller 1116, the actual buffer (memory), which may be an SRAM or DRAM buffer 1118 that may be included as part of the same chip as interface controller 1100 or be on a separate chip. The buffer manager provides buffering features that are described further below.

The buffer manager 1112 is also connected to a processor Interface/Servo and ID-Less/Defect Manager (MPIF/SAIL/DM) circuit 1122, which performs the functions of track format generation and defect management. The MPIF/SAIL/DM circuit 1122, in turn, connects to the Advanced High Performance Bus (AHB) 1126. Connected to the AHB bus 1126 is a line cache 1128, and a processor 1130; a Tight!y Coupled Memory (TCM) 1134 is associated with the processor 1130. The processor 1130 may be implemented by an embedded processor or by an microprocessor. The purpose of the line cache 1128 is to reduce code execution latency. It may be coupled to an external f!ash memory 1106.

The remaining blocks in the disk drive controller 1100 perform functions to support a disk drive and include the servo controller 1140, the disk formatter and error correction circuit 1142, and the read channel circuitry 1144, which connects to the pre-amplification circuit in the disk drive 1104. The 14-line parallel bus with 8 lines (0-7) may carry the bi-directional in/out (I/O) data. The remaining lines may carry the commands CLE, ALE, /CE, /RE, /WE and R/B respectively.

Referring now to Figure 28, the interface controller of Figure 27 is shown in more detail. The interface controller 1110 includes a flash controller (flash_ctl) block 1150, a flash register (flash_reg) block 1152, a flash FIFO wrapper (flash_fifo_wrapper) block 1154, and a flash system synchronization (flash_sys_syn) block 1156.

The flash register block 1152 is used for register access. It stores commands programmed by the processor 1130 and the host 1102. A flash state machine (not shown) in the flash controller 1150 decodes the incoming command from the host 1102 and provides the controls for the disk drive controller 1100. The flash FIFO wrapper 1154 includes a FIFO, which may be implemented by a 32x32 bi-directional asynchronous FIFO. it generates data and control signals for transferring data to and receiving data from the buffer manager 1112 via the buffer manager interface (BM IF). The transfer direction of the FIFO may be controlled by the commands stored in the flash register 1152. The flash system synchronization block 1156 synchronizes control signals between the interface controller and the buffer manager interface. It also generates a counter clear pulse (clk2_clr) for the flash FIFO wrapper 1154.

The flash controller 1150 may control the interface signal lines to implement a random read of the LPDD. The flash controller 1150 may control the interface signal lines to implement a random write of the LPDD. The flash controller 1150 may control the interface signal lines to implement a sequential read of the LPDD and may control the interface signal lines to implement a sequential write of the LPDD. The flash controller 1150 may control the interface signal lines to implement a transfer of commands between the control module and the LPDD. The flash controller 1150 may map a set of LPDD commands to a corresponding set of flash memory commands.

The register memory 1152 communicates with the interface controller and a LPDD processor via a processor bus. The register memory 1152 stores commands programmed by the LPDD processor and the control module. The flash controller 1150 may store read data from the LPDD in the buffer memory to compensate for differences in data transfer rates between the control module and the LPDD and may send a data ready signal to the control module to indicate there is data in the memory buffer.

The flash controller 1150 may store write data from the control module in the buffer memory to compensate for differences in data transfer rates between the control module and the LPDD. The flash controller 1150 may send a data ready signal to the control module to indicate there is data in the memory buffer.

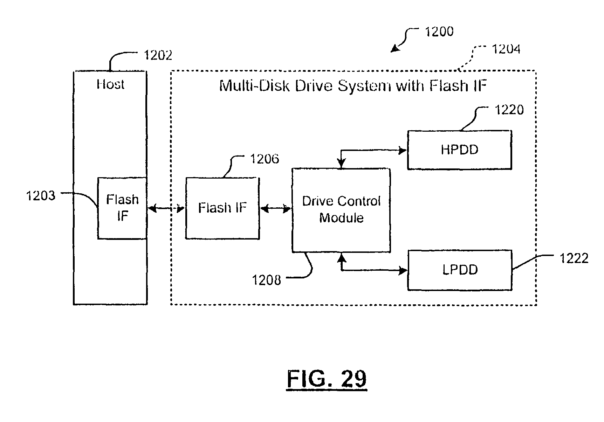

Referring now to FIG. 29, a functional block diagram of a multi-disk drive system with a flash interface is shown generally at 1200. While the preceding discussion related to the use of one disk drive (such as the low power or high power disk drive) with a flash interface, multiple disk drives can be connected via the flash interface. More particularly, the multi-disk drive system with a flash interface 1200 include a host flash interface 1206 that communicates with a flash interface of a host 1202. The host flash interface 1202 operates as described above. A drive control module 1208 selectively operates zero, one or both of the HPDD 1220 and the LPDD 1222. Control techniques that are described above with respect to operation of low power and high power modes can be performed by the drive control module 1208. In some implementations, the host flash interface 1206 senses a power mode of the host and/or receives information that identifies a power mode of the host 1202.

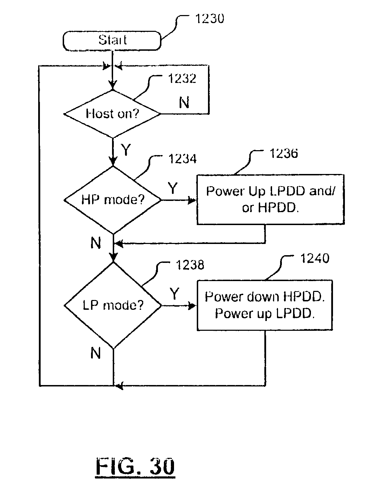

Referring now to FIG. 30, a flowchart illustrating steps performed by the multi-disk drive of FIG. 30 are shown. Control begins with step 1230. in step 1232, control determines whether the host is on. If step 1232 is true, control determines whether the host is in a high power mode in step 1234. If step 1234 is true, control powers up the LPDD 1222 and/or the HPDD 1220 as needed in step 1236. If step 1234 is false, control determines whether the host is in a low power mode in step 1238. if step 1238 is true, control powers down the HPDD and operates the LPDD as needed to conserve power in step 1240. Control continues from step 1238 (if false) and step 1240 with step 1232.

As can be appreciated, the HODs with flash interfaces that are described above can use the multi-disk drive with flash interface as described above. Furthermore, any of the control techniques described above with respect to systems with LPDD and HPDD can be used in the multi-disk drive with flash interface shown in FIG. 29. The LPDD or HPDD can be replaced in any of the embodiments described above by any type of low power non-volatile memory. For example, the LPDD or HPDD can be replaced by any suitable non-volatile solid state memory such as but not limited to flash memory. Likewise, the low power non-volatile memory described in any of the embodiments described above may be replaced by the low power disk drives. While flash memory is described above in some embodiments, any type of non-volatile semiconductor memory can be used.

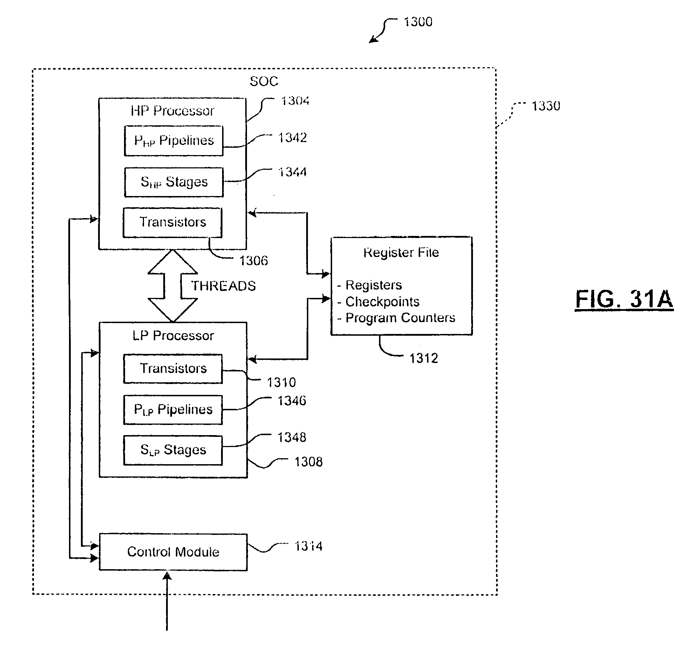

Referring now to FIGs. 31A-31C, various data processing systems are shown that operate in high-power and low-power modes. When transitioning between the high-power and low-power modes, the high-power and low-power processors selectively transfer one or more program threads to each other. The threads may be in various states of completion. This allows seamless transitions between the high-power and low-power modes.

In FIG. 31A, a processing systems 1300 includes a high-power (HP) processor 1304, a low-power (LP) processor 1308 and a register file 1312. In the high-power mode, the high-power processor 1304 is in the active state and processes threads. The low-power processor 1308 may also operate during the high-power mode. In other words, the low-power processor may be in the active state during all or part of the high-power mode and/or may be in the inactive mode.

In the low-power mode, the low-power processor 1308 operates in the active state and the high-power processor 1304 is in the inactive state. The high-power and low-power processors 1304 and 1308, respectively, may use the same or a similar instruction set. The low-power and high-power processors may have the same or a similar architecture. Both processors 1304 and 1308 may temporarily operate in the active state at the same time when transitioning from the low-power mode to the high-power mode and when transitioning from the high-power mode to the low-power mode.

The high-power and low-power processors 1304 and 1308 include transistors 1306 and 1310, respectively. The transistors 1306 of the high-power processor 1304 tend to consume more power during operation in the active state than the transistors 1310 of the low-power processor 1308. In some implementations, the transistors 1306 may have higher leakage current than the transistors 1310. The transistors 1310 may have a size that is greater than a size of the transistors 1306.

The high-power processor 1304 may be more complex than the low-power processor 1308. For example, the low-power processor 1308 may have a smaller width and/or depth than the high-power processor. In other words, the width may be defined by the number of parallel pipelines. The high power processor 1304 may include P_{HP} parallel pipelines 1342 and the low-power processor 1308 may include P_{LP} parallel pipelines 1346. In some implementations, P_{LP} may be less than P_{HP}. P_{LP} may be an integer greater than or equal to zero. When P_{LP} = 0, the low power processor does not include any parallel pipelines. The depth may be defined by the number of stages. The high power processor 1304 may include S_{HP} stages 1344 and the low-power processor 1308 may include S_{LP} stages 1348. In some implementations, S_{LP} may be less than S_{HP}. S_{LP} may be an integer greater than or equal to one.

The register file 1312 may be shared between the high-power processor 1304 and the low-power processor 1308. The register file 1312 may use predetermined address locations for registers, checkpoints and/or program counters. For example, registers, checkpoints and/or program counters that are used by the high-power or low-power processors 1304 and/or 1308, respectively, may be stored in the same locations in register file 1312. Therefore, the high-power processor 1304 and the low-power processor 1308 can locate a particular register, checkpoint and/or program counter when new threads have been passed to the respective processor. Sharing the register file 1312 facilitates passing of the threads. The register file 1312 may be in addition to register files (not shown) in each of the high-power and low-power processors 1304 and 1308, respectively. Threading may include single threading and/or muiti-threading.

A control module 1314 may be provided to selectively control transitions between the high-power and low-power modes. The control module 1314 may receive a mode request signal from another module or device. The control module 1314 may monitor the transfer of threads and/or information relating to the thread transfer such as registers, checkpoints and/or program counters. Once the transfer of the thread is complete, the control module 1314 may transition one of the high-power and low-power processors into the inactive state.

The high-power processor 1304, the low-power processor 1308, the register file 1312 and/or the control module 1314 may be implemented as a system on chip (SOC) 1330.

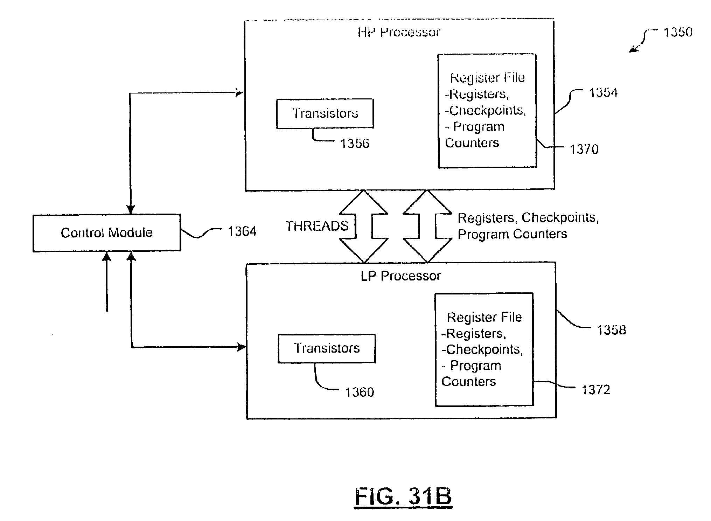

In FIG. 31B, a processing system 1350 includes a high-power (HP) processor 1354 and a low-power (LP) processor 1358. The high-power processor 1354 includes a register file 1370 and the low-power processor 1358 includes a register file 1372.

In the high-power mode, the high-power processor 1354 is in the active state and processes threads. The low-power processor 1358 may also operate during the high-power mode. In other words, the low-power processor 1358 may be in the active state (and may process threads) during all or part of the high-power mode and/or may be in the inactive mode. In the low-power mode, the low-power processor 1358 operates in the active state and the high-power processor 1354 is in the inactive state. The high-power and low-power processors 1354 and 1358, respectively, may use the same or a similar instruction set. The processors 1354 and 1358 may have the same or a similar architecture. Both processors 1354 and 1358 may be in the active state when transitioning from the low-power mode to the high-power mode and when transitioning from the high-power mode to the low-power mode.

The high-power and low-power processors 1354 and 1358 include transistors 1356 and 1360, respectively. The transistors 1356 tend to consume more power during operation in the active state than the transistors 1360. In some implementations, the transistors 1356 may have higher leakage current than the transistors 1360. The transistors 1360 may have a size that is greater than a size of the transistors 1356.

The high-power processor 1354 may be more complex than the low-power processor 1358. For example, the low-power processor 1358 may have a smaller width and/or depth than the high-power processor as shown in FIG. 31A. In other words, the width of the low-power processor 1358 may include fewer (or no) parallel pipelines than the high-power processor 1354. The depth of the low-power processor 1358 may include fewer stages than the high-power processor 1354.

The register file 1370 stores thread information such as registers, program counters, and checkpoints for the high-power processor 1354. The register file 1372 stores thread information such as registers, program counters, and checkpoints for the low-power processor 1358. During the transfer of threads, the high-power and low-power processors 1354 and 1358, respectively, may also transfer registers, program counters, and checkpoints associated with the transferred thread for storage in the register file 1370 and/or 1372.

A control module 1364 may be provided to control the transitions between the high-power and low-power modes. The control module 1364 may receive a mode request signal from another module. The control module 1364 may be integrated with either the HP or the LP processor. The control module 1364 may monitor the transfer of the threads and/or information relating to registers, checkpoints and/or program counters. Once the transfer of the thread(s) is complete, the control module 1364 may transition one of the high-power and low-power processors into the inactive state.

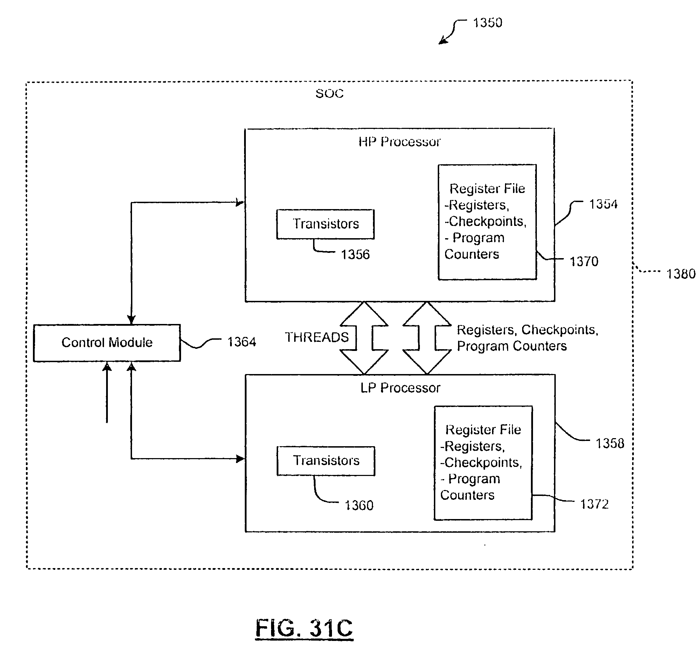

In FIG. 31C, two or more of the high-power processor 1354, the low-power processor 1358, and/or the control module 1364 are integrated in a system-on-chip (SOC) 1380. As can be appreciated, the control module 1364 may be implemented separately as well. While the register files 1370 and 1372 are shown as part of the HP and LP processors, they may be implemented separately as well.

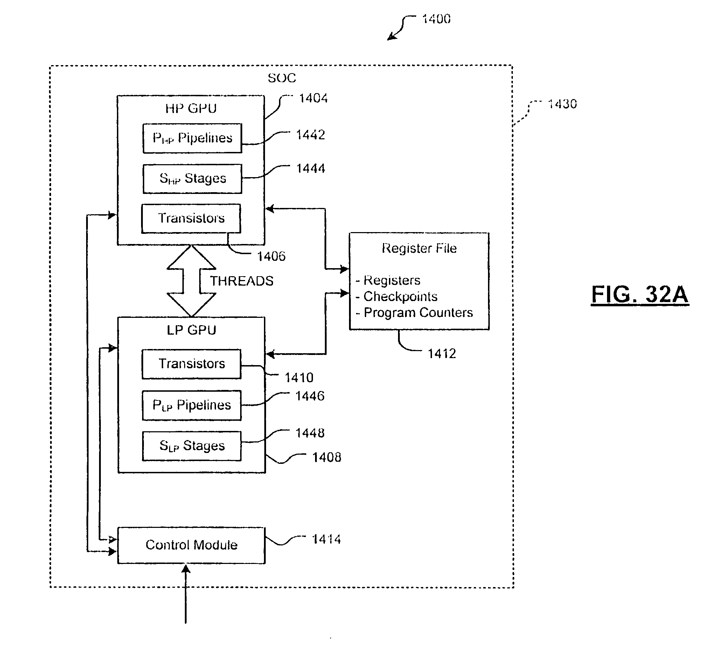

Referring now to FIGs. 32A-32C, various graphics processing systems are shown that operate in high-power and low-power modes. When transitioning between the high-power and low-power modes, high-power and low-power graphics processing units (GPUs) selectively transfer one or more program threads to each other. The threads may be in various states of completion. This allows seamless transitions between the high-power and low-power modes.

In FiG. 32A, a graphics processing system 1400 includes a high-power (HP) GPU 1404, a low-power (LP) GPU 1408 and a register file 1412. In the high-power mode, the high-power GPU 1404 is in the active state and processes threads. The low-power GPU 1408 may also operate during the high-power mode. In other words, the low-power GPU may be in the active state during all or part of the high-power mode and/or may be in the inactive mode.

In the low-power mode, the low-power GPU 1408 operates in the active state and the high-power GPU 1404 is in the inactive state. The high-power and low-power GPUs 1404 and 1408, respectively, may use the same or a similar instruction set. The low-power and high-power GPUs may have the same or a similar architecture. Both GPUs 1404 and 1408 may temporarily operate in the active state at the same time when transitioning from the low-power mode to the high-power mode and when transitioning from the high-power mode to the low-power mode.

The high-power and low-power GPUs 1404 and 1408 include transistors 14C6 and 1410, respectively. The transistors 1406 of the high-power GPU 1404 tend to consume more power during operation in the active state than the transistors 1410 of the low-power GPU 1408. In some implementations, the transistors 1406 may have higher leakage current than the transistors 1410. The transistors 1410 may have a size that is greater than a size of the transistors 1406.

The high-power GPU 1404 may be more complex than the low-power GPU 1408. For example, the low-power GPU 1408 may have a smaller width and/or depth than the high-power GPU. In other words, the width may be defined by the number of parallel pipelines. The high power GPU 1404 may include P_{HP} parallel pipelines 1442 and the low-power GPU 1408 may include P_{LP} parallel pipelines 1446. In some implementations, P_{LP} may be less than P_{HP}. P_{LP} may be an integer greater than or equal to zero. When P_{LP} = 0, the low power GPU does not include any parallel pipelines. The depth may be defined by the number of stages. The high power GPU 1404 may include S_{HP} stages 1444 and the low-power GPU 1408 may include S_{LP} stages 1448. In some implementations, S_{LP} may be less than S_{HP}. S_{LP} may be an integer greater than or equal to one.

The register file 1412 may be shared between the high-power GPU 1404 and the low-power GPU 1408. The register file 1412 may use predetermined address locations for registers, checkpoints and/or program counters. For example, registers, checkpoints and/or program counters that are used by the high-power or low-power GPUs 1404 and/or 1408, respectively, may be stored in the same locations in register file 1412. Therefore, the high-power GPU 1404 and the low-power GPU 1408 can locate a particular register, checkpoint and/or program counter when new threads have been passed to the respective GPU. Sharing the register file 1412 facilitates passing of the threads. The register file 1412 may be in addition to register files (not shown) in each of the high-power and low-power GPUs 1404 and 1408, respectively. Threading may include single threading and/or multi-threading.

A control module 1414 may be provided to selectively control transitions between the high-power and low-power modes. The control module 1414 may receive a mode request signal from another module or device. The control module 1414 may monitor the transfer of threads and/or information relating to the thread transfer such as registers, checkpoints and/or program counters. Once the transfer of the thread is complete, the control module 1414 may transition one of the high-power and low-power GPUs into the inactive state.

The high-power GPU 1404, the low-power GPU 1408, the register file 1412 and/or the control module 1414 may be implemented as a system on chip (SOC) 1430.

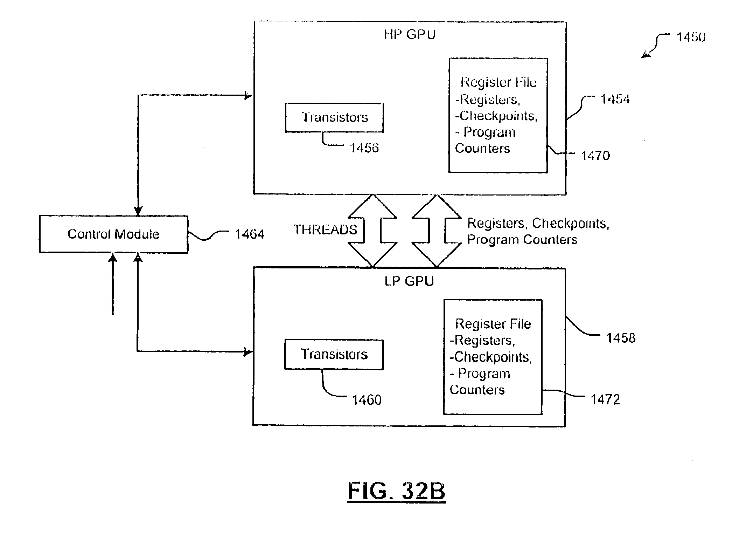

In FIG. 32B, a processing system 1450 includes a high-power (HP) GPU 1454 and a low-power (LP) GPU 1458. The high-power GPU 1454 includes a register file 1470 and the low-power GPU 1458 includes a register file 1472.

In the high-power mode, the high-power GPU 1454 is in the active state and processes threads. The low-power GPU 1458 may also operate during the high-power mode. In other words, the low-power GPU 1458 may be in the active state (and may process threads) during all or part of the high-power mode and/or may be in the inactive mode. In the low-power mode, the low-power GPU 1458 operates in the active state and the high-power GPU 1454 is in the inactive state. The high-power and low-power GPUs 1454 and 1458, respectively, may use the same or a similar instruction set. The GPUs 1454 and 1458 may have the same or a similar architecture. Both GPUs 1454 and 1458 may be in the active state when transitioning from the low-power mode to the high-power mode and when transitioning from the high-power mode to the low-power mode.

The high-power and low-power GPUs 1454 and 1456 include transistors 1456 and 1460, respectively. The transistors 1456 tend to consume more power during operation in the active state than the transistors 1460. In some implementations, the transistors 1456 may have higher leakage current than the transistors 1460. The transistors 1460 may have a size that is greater than a size of the transistors 1456.

The high-power GPU 1454 may be more complex than the low-power GPU 1458. For example, the low-power GPU 1458 may have a smaller width and/or depth than the high-power GPU as shown in FIG. 32A. in other words, the width of the low-power GPU 1458 may include fewer parallel pipelines than the high-power GPU 1454. The depth of the low-power GPU 1458 may include fewer stages than the high-power GPU 1454.

The register file 1470 stores thread information such as registers, program counters, and checkpoints for the high-power GPU 1454. The register file 1472 stores thread information such as registers, program counters, and checkpoints for the low-power GPU 1458. During the transfer of threads, the high-power and low-power GPUs 1454 and 1458, respectively, may also transfer registers, program counters, and checkpoints associated with the transferred thread for storage in the register file 1470 and/or 1472.

A control module 1464 may be provided to control the transitions between the high-power and low-power modes. The control module 1464 may receive a mode request signal from another module. The control module 1464 may monitor the transfer of the threads and/or information relating to registers, checkpoints and/or program counters. Once the transfer of the thread(s) is complete, the control module 1464 may transition one of the high-power and low-power GPUs into the inactive state.

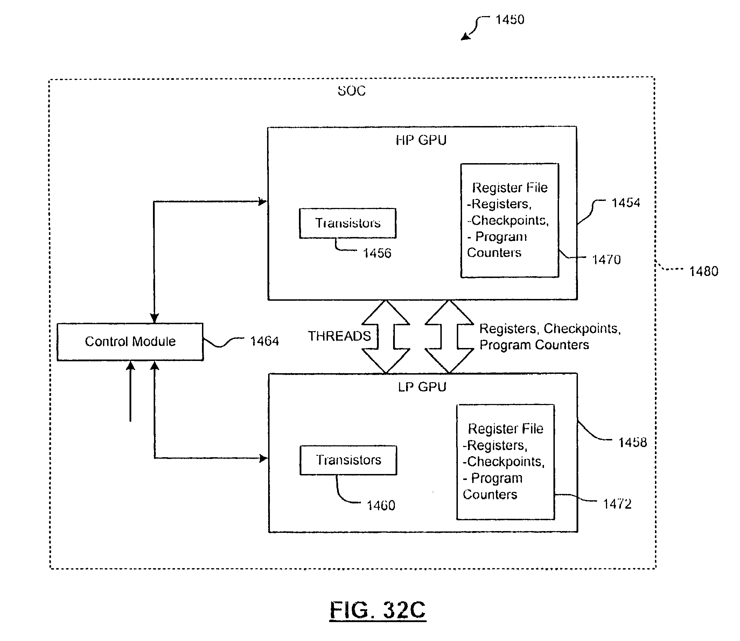

In FIG. 32C, two or more of the high-power GPU 1454, the low-power GPU 1458, and/or the control module 1464 are integrated in a system-on-chip (SOC) 1480. As can be appreciated, the control module 1464 may be implemented separately as well.

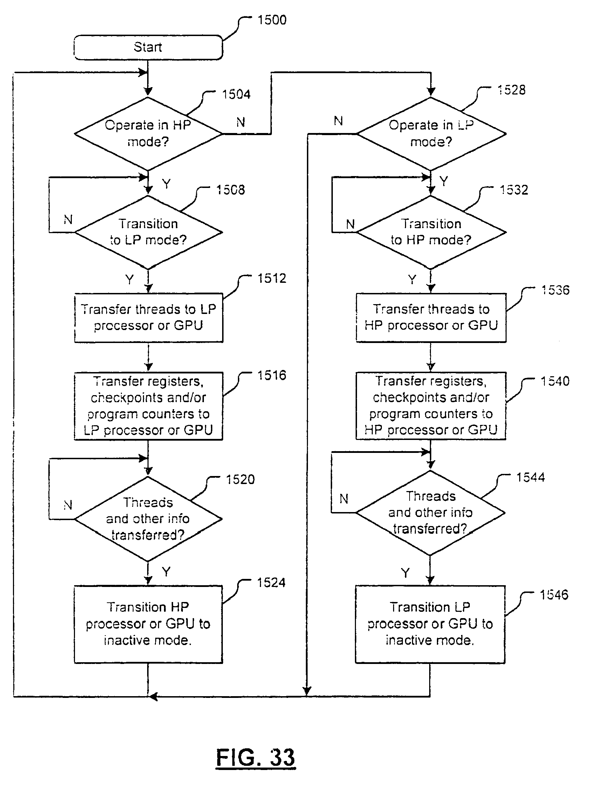

Referring now to FIG. 33, a flowchart illustrating an exemplary method for operating the data and graphics processing systems of FIGs. 31A-32C is shown. Operation begins in step 1500. in step 1504, control determines whether the device is operating in a high-power mode. In step 1508, control determines whether a transition to low-power mode is requested. When step 1508 is true, control transfers data or graphics threads to the low-power processor or GPU in step 1512. In step 1516, control transfers information such as registers, checkpoints and/or program counters to the low-power processor or GPU if needed. This step may be omitted when a common memory is used. In step 1520, control determines whether the threads and/or other information have been properly transferred to the lower-power processor or GPU. If step 1520 is true, control transitions the high-power processor or GPU to the inactive state.

If step 1504 is false, control determines whether the device is operating in a low-power mode. If step 1520 is true, control determines whether a transition to high-power mode is requested. If step 1532 is true, control transfers data or graphic threads to the high-power processor or GPU in step 1536. In step 1540, control transfers information such as registers checkpoints and/or program counters to the high-power processor or GPU. This step may be omitted when a common memory is used. In step 1544, control determines whether the threads and/or other information have been transferred to the high-power processor or GPU. When step 1544 is true, control transitions the low-power processor or GPU to the inactive state and control returns to step 1504.

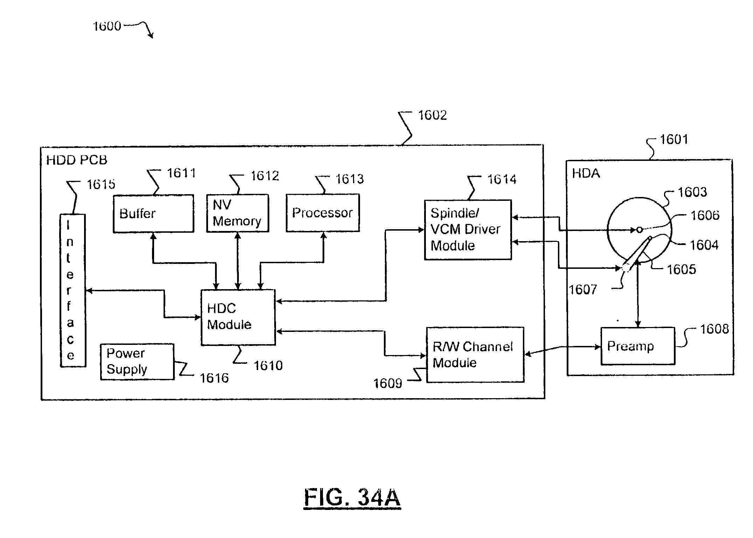

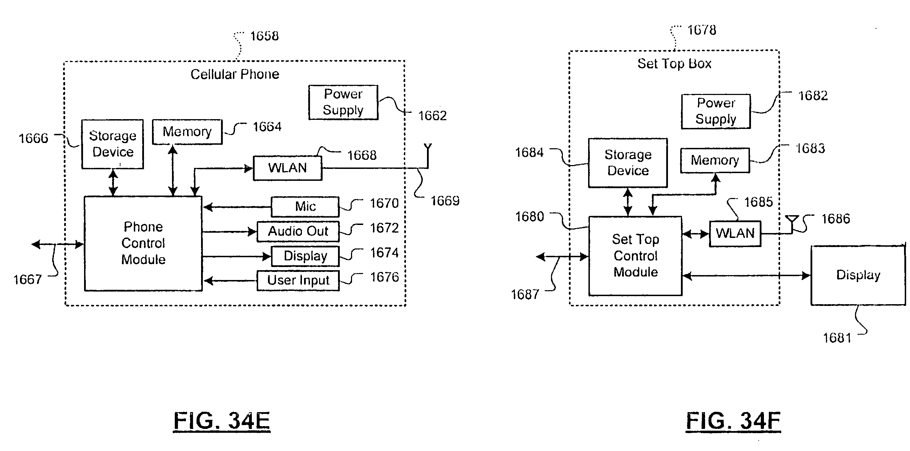

Referring now to FIGs. 34A-34G, various exemplary implementations incorporating the teachings of the present disclosure are shown.

Referring now to FIG. 34A, the teachings of the disclosure can be implemented in a control system of a hard disk drive (HDD) 1600. The HDD 1600 includes a hard disk assembly (HDA) 1601 and a HDD PCB 1602. The HDA 1601 may include a magnetic medium 1603, such as one or more platters that store data, and a read/write device 1604. The read/write device 1604 may be arranged on an actuator arm 1605 and may read and write data on the magnetic medium 1603. Additionally, the HDA 1601 includes a spindle motor 1606 that rotates the magnetic medium 1603 and a voice-coil motor (VCM) 1607 that actuates the actuator arm 1605. A preamplifier device 1608 amplifies signals generated by the read/write device 1604 during read operations and provides signals to the read/write device 1604 during write operations.

The HDD PCB 1602 includes a read/write channel module (hereinafter, "read channel") 1609, a hard disk controller (HDC) module 1610, a buffer 1611, nonvolatile memory 1612, a processor 1613, and a spindle/VCM driver module 1614. The read channel 1609 processes data received from and transmitted to the preamplifier device 1608. The HDC module 1610 controls components of the HDA 1601 and communicates with an external device (not shown) via an I/O interface 1615. The external device may include a computer, a multimedia device, a mobile computing device, etc. The I/O interface 1615 may include wireline and/or wireless communication links.

The HDC module 1610 may receive data from the HDA 1601, the read channel 1609, the buffer 1611, nonvolatile memory 1612, the processor 1613, the spindle/VCM driver module 1614, and/or the I/O interface 1615. The processor 1613 may process the data, including encoding, decoding, filtering, and/or formatting. The processed data may be output to the HDA 1601, the read channel 1609, the buffer 1611, nonvolatile memory 1612, the processor 1613, the spindle/VCM driver module 1614, and/or the I/O interface 1615.

The HDC module 1610 may use the buffer 1611 and/or nonvotatile memory 1612 to store data related to the control and operation of the HDD 1600. The buffer 1611 may include DRAM, SDRAM, etc. The nonvolatile memory 1612 may include flash memory (including NAND and NOR flash memory), phase change memory, magnetic RAM, or multi-state memory, in which each memory cell has more than two states. The spindle/VCM driver module 1614 controls the spindle motor 1606 and the VCM 1607. The HDD PCB 1602 includes a power supply 1616 that provides power to the components of the HDD 1600.

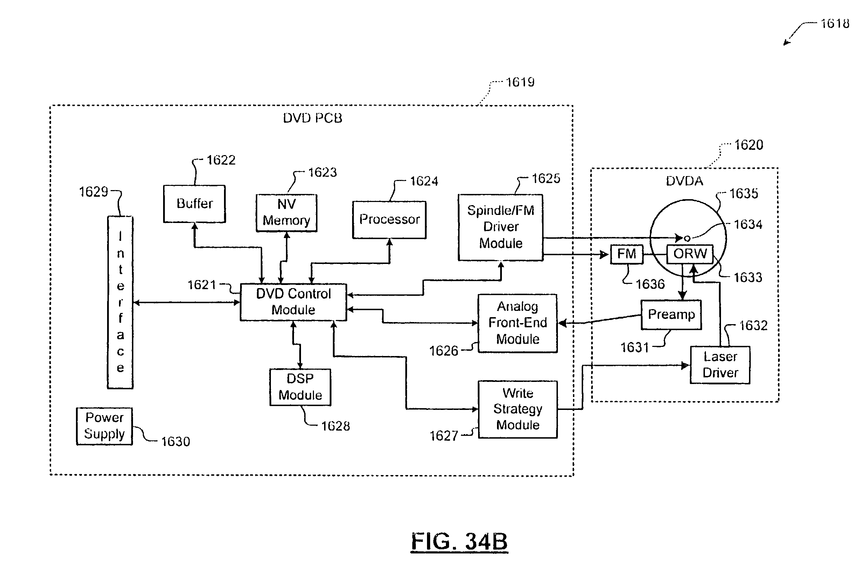

Referring now to FiG. 34B, the teachings of the disclosure can be implemented in a control system of a DVD drive 1618 or of a CD drive (not shown). The DVD drive 1618 includes a DVD PCB 1619 and a DVD assembly (DVDA) 1620. The DVD PCB 1619 includes a DVD control module 1621, a buffer 1622, nonvolatile memory 1623, a processor 1624, a spindle/FM (feed motor) driver module 1625, an analog front-end module 1626, a write strategy module 1627, and a DSP module 1628.

The DVD control module 1621 controls components of the DVDA 1620 and communicates with an external device (not shown) via an I/O interface 1629. The external device may include a computer, a multimedia device, a mobile computing device, etc. The I/O interface 1629 may include wireline and/or wireless communication links.

The DVD control module 1621 may receive data from the buffer 1622, nonvolatile memory 1623, the processor 1624, the spindle/FM driver module 1625, the analog front-end module 1626, the write strategy module 1627, the DSP module 1628, and/or the I/O interface 1629. The processor 1624 may process the data, including encoding, decoding, filtering, and/or formatting. The DSP module 1628 performs signal processing, such as video and/or audio coding/decoding. The processed data may be output to the buffer 1622, nonvolatile memory 1623, the processor 1624, the spindle/FM driver module 1625, the analog front-end module 1626, the write strategy module 1627, the DSP module 1628, and/or the I/O interface 1629.

The DVD control module 1621 may use the buffer 1622 and/or nonvolatile memory 1623 to store data related to the control and operation of the DVD drive 1618. The buffer 1622 may include DRAM, SDRAM, etc. The nonvolatile memory 1623 may include flash memory (including NAND and NOR flash memory), phase change memory, magnetic RAM, or multi-state memory, in which each memory cell has more than two states. The DVD PCB 1619 includes a power supply 1630 that provides power to the components of the DVD drive 1618.

The DVDA 1620 may include a preamplifier device 1631, a laser driver 1632, and an optical device 1633, which may be an optical read/write (ORW) device or an optical read-only (OR) device. A spindle motor 1634 rotates an optical storage medium 1635, and a feed motor 1636 actuates the optical device 1633 relative to the optical storage medium 1635.

When reading data from the optical storage medium 1635, the laser driver provides a read power to the optical device 1633. The optical device 1633 detects data from the optical storage medium 1635, and transmits the data to the preamplifier device 1631. The analog front-end module 1626 receives data from the preamplifier device 1631 and performs such functions as filtering and A/D conversion. To write to the optical storage medium 1635, the write strategy module 1627 transmits power level and timing information to the laser driver 1632. The laser driver 1632 controls the optical device 1633 to write data to the optical storage medium 1635.

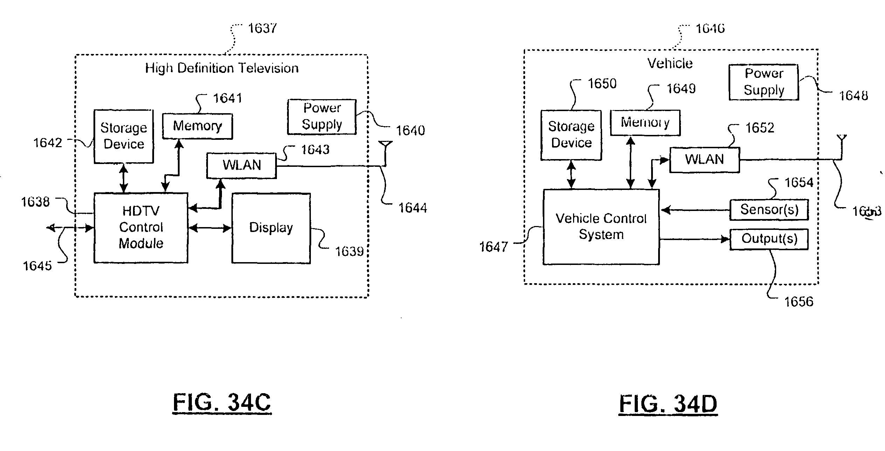

Referring now to FIG. 34C, the teachings of the disclosure can be implemented in a control system of a high definition television (HDTV) 1637. The HDTV 1637 includes a HDTV control module 1638, a display 1639, a power supply 1640, memory 1641, a storage device 1642, a WLAN interface 1643 and associated antenna 1644, and an external interface 1645.

The HDTV 1637 can receive input signals from the WLAN interface 1643 and/or the external interface 1645, which sends and receives information via cable, broadband Internet, and/or satellite. The HDTV control module 1638 may process the input signals, including encoding, decoding, filtering, and/or formatting, and generate output signals. The output signals may be communicated to one or more of the display 1639, memory 1641, the storage device 1642, the WLAN interface 1643, and the external interface 1645.

Memory 1641 may include random access memory (RAM) and/or nonvolatile memory such as flash memory, phase change memory, or muiti-state memory, in which each memory cell has more than two states. The storage device 1642 may include an optical storage drive, such as a DVD drive, and/or a hard disk drive (HDD). The HDTV control module 1638 communicates externally via the WLAN interface 1643 and/or the external interface 1645. The power supply 1640 provides power to the components of the HDTV 1637.

Referring now to FIG. 34D, the teachings of the disclosure may be implemented in a control system of a vehicle 1646. The vehicle 1648 may include a vehicle control system 1647, a power supply 1648, memory 1649, a storage device 1650, and a WLAN interface 1652 and associated antenna 1653. The vehicle control system 1647 may be a powertrain control system, a body control system, an entertainment control system, an anti-lock braking system (ABS), a navigation system, a telematics system, a lane departure system, an adaptive cruise control system, etc.

The vehicle control system 1647 may communicate with one or more sensors 1654 and generate one or more output signals 1656. The sensors 1654 may include temperature sensors, acceleration sensors, pressure sensors, rotational sensors, airflow sensors, etc. The output signals 1656 may control engine operating parameters, transmission operating parameters, suspension parameters, etc.

The power supply 1648 provides power to the components of the vehicle 1646. The vehicle control system 1647 may store data in memory 1649 and/or the storage device 1650. Memory 1649 may include random access memory (RAM) and/or nonvolatile memory such as flash memory, phase change memory, or multi-state memory, in which each memory cell has more than two states. The storage device 1650 may include an optical storage drive, such as a DVD drive, and/or a hard disk drive (HDD). The vehicle control system 1647 may communicate externally using the WLAN interface 1652.

Referring now to FIG. 34E, the teachings of the disclosure can be implemented in a control system of a cellular phone 1658. The cellular phone 1658 includes a phone control module 1660, a power supply 1662, memory 1664, a storage device 1666, and a cellular network interface 1667. The cellular phone 1658 may include a WLAN interface 1668 and associated antenna 1669, a microphone 1670, an audio output 1672 such as a speaker and/or output jack, a display 1674, and a user input device 1676 such as a keypad and/or pointing device.

The phone control module 1660 may receive input signals from the cellular network interface 1667, the WLAN interface 1668, the microphone 1070, and/or the user input device 1676. The phone control module 1660 may process signals, including encoding, decoding, filtering, and/or formatting, and generate output signals. The output signals may be communicated to one or more of memory 1664, the storage device 1666, the cellular network interface 1667, the WLAN interface 1668, and the audio output 1672.

Memory 1664 may include random access memory (RAM) and/or nonvolatile memory such as flash memory, phase change memory, or multi-state memory, in which each memory cell has more than two states. The storage device 1666 may include an optical storage drive, such as a DVD drive, and/or a hard disk drive (HDD). The power supply 1662 provides power to the components of the cellular phone 1658.

Referring now to FIG. 34F, the teachings of the disclosure can be implemented in a control system of a set top box 1678. The set top box 1678 includes a set top control module 1680, a display 1681, a power supply 1682, memory 1683, a storage device 1684, and a WLAN interface 1685 and associated antenna 1686.

The set top control module 1680 may receive input signals from the WLAN interface 1685 and an external interface 1687, which can send and receive information via cable, broadband internet, and/or satellite. The set top control module 1680 may process signals, including encoding, decoding, filtering, and/or formatting, and generate output signals. The output signals may include audio and/or video signals in standard and/or high definition formats. The output signals may be communicated to the WLAN interface 1685 and/or to the display 1681. The display 1681 may include a television, a projector, and/or a monitor.

The power supply 1682 provides power to the components of the set top box 1678. Memory 1683 may include random access memory (RAM) and/or nonvolatile memory such as flash memory, phase change memory, or multi-state memory, in which each memory cell has more than two states. The storage device 1684 may include an optical storage drive, such as a DVD drive, and/or a hard disk drive (HDD).

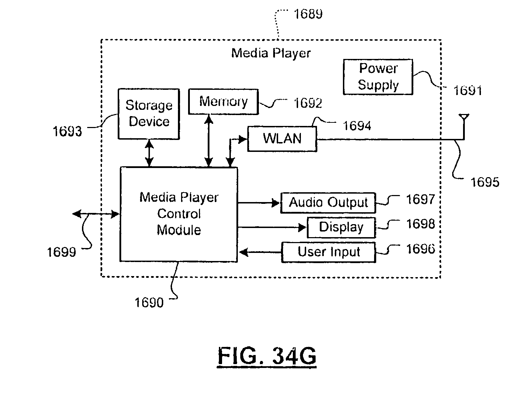

Referring new to FIG. 34G, the teachings of the disclosure can be implemented in a control system of a media player 1689. The media player 1689 may include a media p!ayer control module 1690, a power supply 1691, memory 1692, a storage device 1693, a WLAN interface 1694 and associated antenna 1695, and an external interface 1699.

The media player control module 1690 may receive input signals from the WLAN interface 1694 and/or the external interface 1699. The external interface 1699 may include USB, infrared, and/or Ethernet. The input signals may include compressed audio and/or video, and may be compliant with the MP3 format. Additionally, the media player control module 1690 may receive input from a user input 1696 such as a keypad, touchpad, or individual buttons. The media player control module 1690 may process input signals, including encoding, decoding, filtering, and/or formatting, and generate output signals.

The media player control module 1690 may output audio signals to an audio output 1697 and video signals to a display 1698. The audio output 1697 may include a speaker and/or an output jack. The display 1698 may present a graphical user interface, which may include menus, icons, etc. The power supply 1691 provides power to the components of the media player 1689. Memory 1692 may include random access memory (RAM) and/or nonvolatile memory such as flash memory, phase change memory, or multi-state memory, in which each memory cell has more than two states. The storage device 1693 may include an optical storage drive, such as a DVD drive, and/or a hard disk drive (HDD).

Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, the specification and the following claims.

## Claims

1. A system on chip (SOC) comprising:
a first processor implemented by said SOC that has active and inactive states and that processes first and second sets of threads during said active state;
a second processor implemented by said SOC that has active and inactive states, wherein said second processor consumes less power when operating in said active state than said first processor operating in said active state; and
a control module implemented by said SOC that communicates with said first and second processors and that selectively transfers said second set of threads from said first processor to said second processor and selects said inactive state of said first processor, wherein said second processor processes said second set of threads.

2. The SOC of Claim 1 further comprising a register file implemented by said SOC that communicates with said first processor and said second processor and that stores thread information for said first and second processors.

3. The SOC of Claim 2 wherein said thread information includes at least one of registers, checkpoints, and program counters for said threads of said first and second processors.

4. The SOC of Claim 1 further comprising:
a first register file that communicates with said first processor and that stores first thread information for said first processor; and
a second register file that communicates with said second processor and that stores second thread information for said second processor.

5. The SOC of Claim 4 wherein said first and second thread information includes at least one of registers, checkpoints, and program counters for said threads of said first and second processors, respectively.

6. The SOC of Claim 4 wherein said control module transfers said thread information from said first register file to said second register file when transferring said threads from said first processor to said second processor.

7. The SOC of Claim 1 wherein said first processor includes first transistors and said second processor includes second transistors, and wherein said first transistors have a higher leakage current than said second transistors.

8. The SOC of Claim 1 wherein said first processor includes first transistors and said second processor includes second transistors, and wherein said second transistors have a greater size than said first transistors.

9. The SOC of Claim 1 wherein said SOC is in a high-power mode when said first processor is in an active state and a low-power mode when said first processor is in an inactive state.

10. The SOC of Claim 1 wherein said first and second processors comprise first and second graphics processing units, respectively.

11. A processing system comprising:
a first processor that has active and inactive states and that processes at least one thread during said active state;
a second processor that has active and inactive states, wherein said second processor consumes less power when operating in said active state than said first processor operating in said active state; and
a control module that communicates with said first and second processors, and that selectively transfers said at least one thread from said first processor to said second processor and selects said inactive state of said first processor, wherein said second processor processes said at least one thread.

12. The processing system of Claim 11 further comprising a register file implemented by said SOC that communicates with said first processor and said second processor and that stores thread information for said first and second processors, wherein said thread information includes at least one of registers, checkpoints, and program counters for said threads of said first and second processors.

13. A system on chip (SOC) comprising said first and second processors and said register file of Claim 12.

14. The processing system of Claim 11 further comprising:
a first register file that communicates with said first processor and that stores first thread information for said first processor; and
a second register file that communicates with said second processor and that stores second thread information for said second processor, wherein said first and second thread information includes at least one of registers, checkpoints, and program counters for said threads of said first and second processors, respectively.

15. A system on chip (SOC) comprising said first and second processors and said first and second register files of Claim 14.

16. The processing system of Claim 14 wherein said control module transfers said thread information from said first register file to said second register file when transferring said threads from said first processor to said second processor.

17. The processing system of Claim 11 wherein said first processor includes first transistors and said second processor includes second transistors, and wherein said first transistors have a higher leakage current than said second transistors.

18. The processing system of Claim 11 wherein said first processor includes first transistors and said second processor includes second transistors, and wherein said second transistors have a greater size than said first transistors.

19. The processing system of Claim 11 wherein said processing system is in a high-power mode when said first processor is in an active state and a low-power mode when said first processor is in an inactive state.

20. The processing system of Claim 11 wherein said first and second processors comprise first and second graphics processing units, respectively.
